# EUROPÄISCHE PATENTANMELDUNG

(11) **EP 2 022 795 A2**
(43) Veröffentlichungstag der Anmeldung: **11.02.2009**
(21) Anmeldenummer: 08160048.8
(22) Anmeldetag: 09.07.2008
(51) Int. Cl.: C07F 7/18, C08K 3/36, B60C 1/00

(54) **Verfahren zur Herstellung von alkylpolyethersubstituierten Mercaptosilanen**

(30) Priorität: 09.08.2007 DE 102007037556
(71) Anmelder: Evonik Degussa GmbH, 45128 Essen (DE)
(72) Erfinder: Friedel, Manuel Dr., 8048, Zürich (CH); Witzsche, Susann, 79618, Rheinfelden (DE)

(57) **Zusammenfassung**

Verfahren zur Herstellung von alkylpolyethersubstituierten Mercaptosilanen der allgemeinen Formel I,

(X)ₘ(X')ₙ(X'')ₒSi(-R¹-SR²)ₚ (I)

und einer Farbzahl nach Hazen von ≤ 250 mg Pt-Co/L, indem man Verbindungen der allgemeinen Formel II,

(X')ₘ₊ₙ(X'')ₒSi(-R¹-SR²)ₚ (II)

mit m Äquivalenten der Verbindungen der allgemeinen Formel III,

H-O-((CR³₂)_{w}-O-)ᵥAlk (III)

unter Verwendung eines protonenliefernden Co-Katalysators und gegebenenfalls eines weiteren Katalysators umsetzt und freigesetztes X'-H von dem Reaktionsgemisch abtrennt.

## Beschreibung

Die vorliegende Erfindung betrifft ein Verfahren zur Herstellung von alkylpolyethersubstituierten Mercaptosilanen.

Es ist bekannt, Silane als Haftvermittler einzusetzen. So werden Aminoalkyltrialkoxysilane, Methacryloxyalkyltrialkoxysilane, Polysulfanalkyltrialkoxysilane und Mercaptoalkyltrialkoxysilane als Haftvermittler zwischen anorganischen Materialen und organischen Polymeren, als Vernetzungsmittel und Oberflächenmodifizierungsmittel eingesetzt (E.P. Plueddemann, "Silane Coupling Agents, 2nd Ed. Plenum Press 1982, Seite 1-53).

Diese Haftvermittler beziehungsweise Kupplungs- oder Verbindungsagentien bilden sowohl zum Füllstoff als auch zum Elastomer Bindungen und bewirken somit zwischen der Füllstoffoberfläche und dem Elastomer eine gute Wechselwirkung.

Desweiteren ist bekannt, dass die Verwendung von handelsüblichen Silanhaftvermittlern mit drei Alkoxysubstituenten am Siliciumatom zur Freisetzung beträchtlicher Mengen an Alkohol während und nach der Anbindung an den Füllstoff führt (DE 22 55 577). Da in der Regel Trimethoxy- und Triethoxy-substituierte Silane eingesetzt werden, werden die entsprechenden Alkohole Methanol und Ethanol in erheblichen Mengen freigesetzt (Berkemeier, D.; Hader, W.; Rinker, M.; Heiss, G., Mixing of silica compounds from the viewpoint of a manufacturer of internal mixers, Gummi, Fasern, Kunststoffe (2001), Band 54(1), Seite 17-22).

Es ist weiterhin bekannt, dass Methoxy- und Ethoxysubstituierte Silane reaktiver sind als die entsprechenden langkettigen Alkoxy-substituierten Silane und somit schneller an den Füllstoff anbinden können, so dass auf den Einsatz von Methoxy- und Ethoxy-Substituenten aus technischer und wirtschaftlicher Sicht bisher nicht verzichtet werden konnte (H.D. Luginsland, "A review on the chemistry and the reinforcement of the silica-silane filler system for rubber applications", Shaker Verlag Aachen 2002, Seite 25ff).

Weiterhin sind aus DE 10137809, JP 62-181346, DE 3426987 und EP 0085831 verschiedene Mercaptosilane bekannt. Aus DE 102005032658.7 und EP 1285926 sind alkylpolyethersubstituierte Mercaptosilane bekannt, aus denen weniger Methanol bzw. Ethanol freigesetzt wird bei gleichbleibender Reaktivität. Diese Silane können synthetisiert werden, indem man Alkoxysilane mit einem Alkylpolyetheralkohol katalysiert umsetzt.

Ein Nachteil der bekannten Verfahren zur Synthese von alkylpolyethersubstituierten Mercaptosilanen ist die dabei auftretende hellbraune bis orangerote Farbe, die in Abhängigkeit von der Qualität und dem Herstellverfahren des eingesetzten Mercaptosilans schwanken kann.

Aus US 5210250 ist ein Verfahren zur Entfärbung von halogenhaltigen Silanen durch Behandlung mit unlöslichen, kationischen, oberflächenaktiven Substanzen bekannt.

Ein Nachteil dieses Verfahrens ist, dass die Entfärbung in einem der Synthese nachfolgenden Schritt erfolgt, was in der betrieblichen Praxis einen nicht unerheblichen Mehraufwand bedeutet.

Ferner sind aus EP 1188758 und EP 1153927 Verfahren bekannt, um die Farbe von Bis-(3-[triethoxysilyl]-propyl)polysulfanen bzw. -tetrasulfanen durch Zugabe von Chlorpropyltrichlorsilan während der Schwefelungsreaktion zu beeinflussen. Aus US 20040092758 ist bekannt, dass durch eine Erhöhung der Reaktionstemperatur bei der Schwefelungsreaktion Polysufidsilane mit geringer Färbung erhalten werden können. Beide Verfahren greifen zu einem Zeitpunkt in den Reaktionsverlauf ein, zu dem sich in der Reaktionsmischung Polysulfidspezies verschiedener Kettenlänge befinden oder bilden. Solche Polysulfidspezies sollten bei den üblichen Verfahren der Mercaptosilanherstellung, wie in US 6680398, US 7151188, US 5840952 oder US 2005/0124822 beschrieben, nicht oder doch in weit geringerem Maße entstehen.

Aufgabe der vorliegenden Erfindung ist es, ein Verfahren zur Herstellung von alkylpolyethersubstituierten Mercaptosilanen zur Verfügung zu stellen, welches die alkylpolyethersubstituierten Mercaptosilane mit schwächerer Färbung liefert.

Gegenstand der Erfindung ist ein Verfahren zur Herstellung von alkylpolyethersubstituierten Mercaptosilanen der allgemeinen Formel I,

(X)ₘ(X')ₙ(X")ₒSi(-R¹-SR²)ₚ (I)

wobei p gleich 1, 2 oder 3, vorzugsweise 1, m gleich 1, 2 oder 3, n und o gleich 0, 1 oder 2 und m+p+n+o = 4 ist, die Gruppen X gleich oder verschieden sind und X eine Alkylpolyethergruppe O-((CR³₂)_{w}-O-)ᵥAlk, vorzugsweise O-(CH₂-CH₂-O-)ᵥAlk oder O-(CH(CH₃)-CH₂-O-)ᵥAlk, ist, mit v = 1-40, bevorzugt 2-30, besonders bevorzugt 3-25, ganz besonders bevorzugt 4-20, außerordentlich bevorzugt 5-16, w = 1-40, bevorzugt 2-30, besonders bevorzugt 2-20, ganz besonders bevorzugt 2-10, R³ unabhängig voneinander H, eine Phenyl- oder eine unverzweigte oder verzweigte Alkylgruppe, vorzugsweise eine C₁-C₁₁ Alkylgruppe, besonders bevorzugt eine CH₃- oder CH₂-CH₃-Gruppe, ist, Alk eine verzweigte oder unverzweigte, gesättigte oder ungesättigte, substituierte oder unsubstituierte, aliphatische, aromatische oder gemischt aliphatische /aromatische einbindige C₁-C₃₅ -, bevorzugt C₂-C₂₂ -, besonders bevorzugt C₃-C₁₈ -, ganz besonders bevorzugt C₄ -C₁₃ -, außerordentlich bevorzugt C₆-C₁₀ -, Kohlenwasserstoffgruppe ist, die Gruppen X' gleich oder verschieden sind und X' eine verzweigte oder unverzweigte Alkoxy-, bevorzugt C₁-C₁₈ Alkoxy-, besonders bevorzugt -OCH₃, -OCH₂-CH₃, -OCH(CH₃)-CH₃, -OCH₂-CH₂-CH₃, -OC₁₂H₂₅, -OC₁₃H₂₇, -OC₁₄H₂₉ oder C₁₅-C₁₈ Alkoxy-, eine verzweigte oder unverzweigte C₂-C₂₅ Alkenyloxy-, vorzugsweise C₄-C₂₀ Alkenyloxy-, besonders bevorzugt C₆ bis C₁₈ Alkenyloxy-, eine C₆-C₃₅ Aryloxy-, vorzugsweise C₉-C₃₀ Aryloxy-, besonders bevorzugt Phenyloxy (-OC₆H₅) oder C₉-C₁₈ Aryloxy-, eine verzweigte oder unverzweigte C₇-C₃₅ Alkylaryloxy-, vorzugsweise C₉-C₃₀ Alkylaryloxy-, besonders bevorzugt Benzyloxy-, (-O-CH₂-C₆H₅) oder -O-CH₂-CH₂-C₆H₅, eine verzweigte oder unverzweigte C₇-C₃₅ Aralkyloxy-, vorzugsweise C₉-C₂₅ Aralkyloxy-, besonders bevorzugt Tolyloxy-(-O-C₆H₄-CH₃) oder eine C₉-C₁₈ Aralkyloxy-, oder eine Hydroxygruppe (-OH) ist,
die Gruppen X" gleich oder verschieden sind und X'' unabhängig voneinander eine verzweigte oder unverzweigte Alkyl-, bevorzugt C₁-C₁₈ Alkyl-, besonders bevorzugt CH₃, CH₂-CH₃, CH(CH₃)-CH₃, CH₂-CH₂-CH₃ oder C₄-C₁₈- Alkyl-, Gruppe ist,
R¹ eine verzweigte oder unverzweigte, gesättigte oder ungesättigte, aliphatische, aromatische oder gemischt aliphatische /aromatische zweibindige C₁-C₃₀ Kohlenwasserstoffgruppe, die gegebenenfalls durch Heteroatome substituiert ist, ist,
R² CN, H oder eine substituierte Carbonylgruppe -C(Het)-Alk ist, wobei Het ein doppelt gebundenes Heteroatom O, S oder NAlk ist und Alk die oben aufgeführte Bedeutung hat,
mit einer Farbzahl nach Hazen von ≤ 250 mg Pt-Co/L, vorzugsweise ≤ 200 mg Pt-Co/L,
welches dadurch gekennzeichnet ist, dass man Verbindungen der allgemeinen Formel II,

(X')ₘ₊ₙ(X'')ₒSi(-R¹-SR²)ₚ (II)

wobei X', X'', R¹, R², m, n, o und p die oben angegebenen Bedeutungen haben,
mit m Äquivalenten der Verbindungen der allgemeinen Formel III,

H-O-((CR³₂)_{w}-O-)ᵥAlk (III)

wobei R³, Alk, v und w die oben angegebenen Bedeutungen haben,
unter Verwendung eines protonenliefernden Co-Katalysators und gegebenenfalls eines weiteren Katalysators umsetzt und freigesetztes X'-H von dem Reaktionsgemisch abtrennt.

Das freigesetzte X'-H kann kontinuierlich oder diskontinuierlich von dem Reaktionsgemisch abtrennt werden.

Die Mercaptosilane der allgemeinen Formel I und II können Gemische aus unterschiedlichen Mercaptosilanen der allgemeinen Formel I und II sein und/oder deren siloxaneinheitenaufweisende Kondensationsprodukte enthalten.

Bevorzugte Verbindungen der allgemeinen Formel I mit R²=H können beispielsweise sein
[(C₁₂H₂₅O-(CH₂-CH₂O)₂]Me₂Si(CH₂)₃SH,
[(C₁₂H₂₅O-(CH₂-CH₂O)₃]Me₂Si(CH₂)₃SH,
[(C₁₂H₂₅O-(CH₂-CH₂O)₄]Me₂Si(CH₂)₃SH,
[(C₁₂H₂₅O-(CH₂-CH₂O)₅]Me₂Si(CH₂)₃SH,
[(C₁₂H₂₅O-(CH₂-CH₂O)₆]Me₂Si(CH₂)₃SH,

[(C₁₃H₂₇O-(CH₂-CH₂O)₂]Me₂Si(CH₂)₃SH,
[(C₁₃H₂₇O-(CH₂-CH₂O)₃]Me₂Si(CH₂)₃SH,
[(C₁₃H₂₇O-(CH₂-CH₂O)₄]Me₂Si(CH₂)₃SH,
[(C₁₃H₂₇O-(CH₂-CH₂O)₅]Me₂Si(CH₂)₃SH,
[(C₁₃H₂₇O-(CH₂-CH₂O)₆]Me₂Si(CH₂)₃SH,

[(C₁₄H₂₉O-(CH₂-CH₂O)₂]Me₂Si(CH₂)₃SH,
[(C₁₄H₂₉O-(CH₂-CH₂O)₃]Me₂Si(CH₂)₃SH,
[(C₁₄H₂₉O-(CH₂-CH₂O)₄]Me₂Si(CH₂)₃SH,
[(C₁₄H₂₉O-(CH₂-CH₂O)₅]Me₂Si(CH₂)₃SH,
[(C₁₄H₂₉O-(CH₂-CH₂O)₆]Me₂Si(CH₂)₃SH,

[(C₁₅H₃₁O-(CH₂-CH₂O)₂]Me₂Si(CH₂)₃SH,
[(C₁₅H₃₁O-(CH₂-CH₂O)₃]Me₂Si(CH₂)₃SH,
[(C₁₅H₃₁O-(CH₂-CH₂O)₄]Me₂Si(CH₂)₃SH,
[(C₁₅H₃₁O-(CH₂-CH₂O)₅]Me₂Si(CH₂)₃SH,
[(C₁₅H₃₁O-(CH₂-CH₂O)₆]Me₂Si(CH₂)₃SH,

[(C₁₆H₃₃O-(CH₂-CH₂O)₂]Me₂Si(CH₂)₃SH,
[(C₁₆H₃₃O-(CH₂-CH₂O)₃]Me₂Si(CH₂)₃SH,
[(C₁₆H₃₃O-(CH₂-CH₂O)₄]Me₂Si(CH₂)₃SH,
[(C₁₆H₃₃O-(CH₂-CH₂O)₅]Me₂Si(CH₂)₃SH,
[(C₁₆H₃₃O-(CH₂-CH₂O)₆]Me₂Si(CH₂)₃SH,

[(C₁₂H₂₅O-(CH₂-CH₂O)₂]₂MeSi(CH₂)₃SH,
[(C₁₂H₂₅O-(CH₂-CH₂O)₃]₂MeSi(CH₂)₃SH,
[(C₁₂H₂₅O-(CH₂-CH₂O)₄]₂MeSi(CH₂)₃SH,
[(C₁₂H₂₅O-(CH₂-CH₂O)₅]₂MeSi(CH₂)₃SH,
[(C₁₂H₂₅O-(CH₂-CH₂O)₆]₂MeSi(CH₂)₃SH,

[(C₁₃H₂₇O-(CH₂-CH₂O)₂]₂MeSi(CH₂)₃SH,
[(C₁₃H₂₇O-(CH₂-CH₂O)₃]₂MeSi(CH₂)₃SH,
[(C₁₃H₂₇O-(CH₂-CH₂O)₄]₂MeSi(CH₂)₃SH,
[(C₁₃H₂₇O-(CH₂-CH₂O)₅]₂MeSi(CH₂)₃SH,
[(C₁₃H₂₇O-(CH₂-CH₂O)₆]₂MeSi(CH₂)₃SH,

[(C₁₄H₂₉O-(CH₂-CH₂O)₂]₂MeSi(CH₂)₃SH,
[(C₁₄H₂₉O-(CH₂-CH₂O)₃]₂MeSi(CH₂)₃SH,
[(C₁₄H₂₉O-(CH₂-CH₂O)₄]₂MeSi(CH₂)₃SH,
[(C₁₄H₂₉O-(CH₂-CH₂O)₅]₂MeSi(CH₂)₃SH,
[(C₁₄H₂₉O-(CH₂-CH₂O)₆]₂MeSi(CH₂)₃SH,

[(C₁₅H₃₁O-(CH₂-CH₂O)₂]₂MeSi(CH₂)₃SH,
[(C₁₅H₃₁O-(CH₂-CH₂O)₃]₂MeSi(CH₂)₃SH,
[(C₁₅H₃₁O-(CH₂-CH₂O)₄]₂MeSi(CH₂)₃SH,
[(C₁₅H₃₁O-(CH₂-CH₂O)₅]₂MeSi(CH₂)₃SH,
[(C₁₅H₃₁O-(CH₂-CH₂O)₆]₂MeSi(CH₂)₃SH,

[(C₁₆H₃₃O-(CH₂-CH₂O)₂]₂MeSi(CH₂)₃SH,
[(C₁₆H₃₃O-(CH₂-CH₂O)₃]₂MeSi(CH₂)₃SH,
[(C₁₆H₃₃O-(CH₂-CH₂O)₄]₂MeSi(CH₂)₃SH,
[(C₁₆H₃₃O-(CH₂-CH₂O)₅]₂MeSi(CH₂)₃SH,
[(C₁₆H₃₃O-(CH₂-CH₂O)₆]₂MeSi(CH₂)₃SH,

[(C₁₁H₂₃O-(CH₂-CH₂O)₂](MeO)₂Si(CH₂)₃SH,
[(C₁₁H₂₃O-(CH₂-CH₂O)₃](MeO)₂Si(CH₂)₃SH,
[(C₁₁H₂₃O-(CH₂-CH₂O)₄](MeO)₂Si(CH₂)₃SH,
[(C₁₁H₂₃O-(CH₂-CH₂O)₅](MeO)₂Si(CH₂)₃SH,
[(C₁₁H₂₃O-(CH₂-CH₂O)₆](MeO)₂Si(CH₂)₃SH,

[(C₁₂H₂₅O-(CH₂-CH₂O)₂](MeO)₂Si(CH₂)₃SH,
[(C₁₂H₂₅O-(CH₂-CH₂O)₃](MeO)₂Si(CH₂)₃SH,
[(C₁₂H₂₅O-(CH₂-CH₂O)₄](MeO)₂Si(CH₂)₃SH,
[(C₁₂H₂₅O-(CH₂-CH₂O)₅](MeO)₂Si(CH₂)₃SH,
[(C₁₂H₂₅O-(CH₂-CH₂O)₆](MeO)₂Si(CH₂)₃SH,

[(C₁₃H₂₇O-(CH₂-CH₂O)₂](MeO)₂Si(CH₂)₃SH,
[(C₁₃H₂₇O-(CH₂-CH₂O)₃](MeO)₂Si(CH₂)₃SH,
[(C₁₃H₂₇O-(CH₂-CH₂O)₄](MeO)₂Si(CH₂)₃SH,
[(C₁₃H₂₇O-(CH₂-CH₂O)₅](MeO)₂Si(CH₂)₃SH,
[(C₁₃H₂₇O-(CH₂-CH₂O)₆](MeO)₂Si(CH₂)₃SH

[(C₁₄H₂₉O-(CH₂-CH₂O)₂](MeO)₂Si(CH₂)₃SH,
[(C₁₄H₂₉O-(CH₂-CH₂O)₃](MeO)₂Si(CH₂)₃SH,
[(C₁₄H₂₉O-(CH₂-CH₂O)₄](MeO)₂Si(CH₂)₃SH,
[(C₁₄H₂₉O-(CH₂-CH₂O)₅](MeO)₂Si(CH₂)₃SH,
[(C₁₄H₂₉O-(CH₂-CH₂O)₆](MeO)₂Si(CH₂)₃SH,

[(C₁₅H₃₁O-(CH₂-CH₂O)₂](MeO)₂Si(CH₂)₃SH,
[(C₁₅H₃₁O-(CH₂-CH₂O)₃](MeO)₂Si(CH₂)₃SH,
[(C₁₅H₃₁O-(CH₂-CH₂O)₄](MeO)₂Si(CH₂)₃SH,
[(C₁₅H₃₁O-(CH₂-CH₂O)₅](MeO)₂Si(CH₂)₃SH,
[(C₁₅H₃₁O-(CH₂-CH₂O)₆](MeO)₂Si(CH₂)₃SH,

[(C₁₆H₃₃O-(CH₂-CH₂O)₂](MeO)₂Si(CH₂)₃SH,
[(C₁₆H₃₃O-(CH₂-CH₂O)₃](MeO)₂Si(CH₂)₃SH,
[(C₁₆H₃₃O-(CH₂-CH₂O)₄](MeO)₂Si(CH₂)₃SH,
[(C₁₆H₃₃O-(CH₂-CH₂O)₅](MeO)₂Si(CH₂)₃SH,
[(C₁₆H₃₃O-(CH₂-CH₂O)₆](MeO)₂Si(CH₂)₃SH,

[(C₁₇H₃₅O-(CH₂-CH₂O)₂](MeO)₂Si(CH₂)₃SH,
[(C₁₇H₃₅O-(CH₂-CH₂O)₃](MeO)₂Si(CH₂)₃SH,
[(C₁₇H₃₅O-(CH₂-CH₂O)₄](MeO)₂Si(CH₂)₃SH,
[(C₁₇H₃₅O- (CH₂-CH₂O) ₅](MeO)₂Si(CH₂)₃SH,
[(C₁₇H₃₅O-(CH₂-CH₂O)₆](MeO)₂Si(CH₂)₃SH,

[(C₁₁H₂₃O-(CH₂-CH₂O)₂]₂(MeO)Si (CH₂)₃SH,
[(C₁₁H₂₃O-(CH₂-CH₂O)₃]₂(MeO)Si (CH₂)₃SH,
[(C₁₁H₂₃O-(CH₂-CH₂O)₄]₂(MeO)Si (CH₂)₃SH,
[(C₁₁H₂₃O-(CH₂-CH₂O)₅]₂(MeO)Si (CH₂)₃SH,
[(C₁₁H₂₃O-(CH₂-CH₂O)₆]₂(MeO)Si (CH₂)₃SH,

[(C₁₂H₂₅O-(CH₂-CH₂O)₂]₂(MeO)Si (CH₂)₃SH,
[(C₁₂H₂₅O-(CH₂-CH₂O)₃]₂(MeO)Si (CH₂)₃SH,
[(C₁₂H₂₅O-(CH₂-CH₂O)₄]₂(MeO)Si (CH₂)₃SH,
[(C₁₂H₂₅O-(CH₂-CH₂O)₅]₂(MeO)Si (CH₂)₃SH,
[(C₁₂H₂₅O-(CH₂-CH₂O)₆]₂(MeO)Si (CH₂)₃SH,

[(C₁₃H₂₇O-(CH₂-CH₂O)₂]₂(MeO)Si (CH₂)₃SH,
[(C₁₃H₂₇O-(CH₂-CH₂O)₃]₂(MeO)Si (CH₂)₃SH,
[(C₁₃H₂₇O-(CH₂-CH₂O)₄]₂(MeO)Si (CH₂)₃SH,
[(C₁₃H₂₇O-(CH₂-CH₂O)₅]₂(MeO)Si (CH₂)₃SH,
[(C₁₃H₂₇O-(CH₂-CH₂O)₆]₂MeO)Si (CH₂)₃SH,

[(C₁₄H₂₉O-(CH₂-CH₂O)₂]₂(MeO)Si (CH₂)₃SH,
[(C₁₄H₂₉O-(CH₂-CH₂O)₃]₂(MeO)Si (CH₂)₃SH,
[(C₁₄H₂₉O-(CH₂-CH₂O)₄]₂(MeO)Si (CH₂)₃SH,
[(C₁₄H₂₉O-(CH₂-CH₂O)₅]₂(MeO)Si (CH₂)₃SH,
[(C₁₄H₂₉O-(CH₂-CH₂O)₆]₂(MeO)Si (CH₂)₃SH,

[(C₁₅H₃₁O-(CH₂-CH₂O)₂]₂(MeO)Si (CH₂)₃SH,
[(C₁₅H₃₁O-(CH₂-CH₂O)₃]₂(MeO)Si (CH₂)₃SH,
[(C₁₅H₃₁O-(CH₂-CH₂O)₄]₂(MeO)Si (CH₂)₃SH,
[(C₁₅H₃₁O-(CH₂-CH₂O)₅]₂(MeO)Si (CH₂)₃SH,
[(C₁₅H₃₁O-(CH₂-CH₂O)₆]₂(MeO)Si (CH₂)₃SH,

[(C₁₆H₃₃O-(CH₂-CH₂O)₂]₂(MeO)Si (CH₂)₃SH,
[(C₁₆H₃₃O-(CH₂-CH₂O)₃]₂(MeO)Si (CH₂)₃SH,
[(C₁₆H₃₃O-(CH₂-CH₂O)₄]₂(MeO)Si (CH₂)₃SH,
[(C₁₆H₃₃O-(CH₂-CH₂O)₅]₂(MeO)Si (CH₂)₃SH,
[(C₁₆H₃₃O-(CH₂-CH₂O)₆]₂(MeO)Si (CH₂)₃SH,

[(C₁₇H₃₅O-(CH₂-CH₂O)₂]₂(MeO)Si (CH₂)₃SH,
[(C₁₇H₃₅O-(CH₂-CH₂O)₃]₂(MeO)Si (CH₂)₃SH,
[(C₁₇H₃₅O-(CH₂-CH₂O)₄]₂(MeO)Si (CH₂)₃SH,
[(C₁₇H₃₅O-(CH₂-CH₂O)₅]₂(MeO)Si (CH₂)₃SH,
[(C₁₇H₃₅O-(CH₂-CH₂O)₆]₂(MeO)Si(CH₂)₃SH,

[(C₁₁H₂₃O-(CH₂-CH₂O)₂](EtO)₂Si(CH₂)₃SH,
[(C₁₁H₂₃O-(CH₂-CH₂O)₃](EtO)₂Si(CH₂)₃SH,
[(C₁₁H₂₃O-(CH₂-CH₂O)₄](EtO)₂Si(CH₂)₃SH,
[(C₁₁H₂₃O-(CH₂-CH₂O)₅](EtO)₂Si(CH₂)₃SH,
[(C₁₁H₂₃O-(CH₂-CH₂O)₆](EtO)₂Si(CH₂)₃SH,

[(C₁₂H₂₅O-(CH₂-CH₂O)₂](EtO)₂Si(CH₂)₃SH,
[(C₁₂H₂₅O-(CH₂-CH₂O)₃](EtO)₂Si(CH₂)₃SH,
[(C₁₂H₂₅O-(CH₂-CH₂O)₄](EtO)₂Si(CH₂)₃SH,
[(C₁₂H₂₅O-(CH₂-CH₂O)₅](EtO)₂Si(CH₂)₃SH,
[(C₁₂H₂₅O-(CH₂-CH₂O)₆](EtO)₂Si(CH₂)₃SH,

[(C₁₃H₂₇O-(CH₂-CH₂O)₂](EtO)₂Si(CH₂)₃SH,
[(C₁₃H₂₇O-(CH₂-CH₂O)₃](EtO)₂Si(CH₂)₃SH,
[(C₁₃H₂₇O-(CH₂-CH₂O)₄](EtO)₂Si(CH₂)₃SH,
[(C₁₃H₂₇O-(CH₂-CH₂O)₅](EtO)₂Si(CH₂)₃SH,
[(C₁₃H₂₇O-(CH₂-CH₂O)₆](EtO)₂Si(CH₂)₃SH

[(C₁₄H₂₉O-(CH₂-CH₂O)₂](EtO)₂Si(CH₂)₃SH,
[(C₁₄H₂₉O-(CH₂-CH₂O)₃](EtO)₂Si(CH₂)₃SH,
[(C₁₄H₂₉O-(CH₂-CH₂O)₄](EtO)₂Si(CH₂)₃SH,
[(C₁₄H₂₉O-(CH₂-CH₂O)₅](EtO)₂Si(CH₂)₃SH,
[(C₁₄H₂₉O-(CH₂-CH₂O)₆](EtO)₂Si(CH₂)₃SH,

[(C₁₅H₃₁O-(CH₂-CH₂O)₂](EtO)₂Si(CH₂)₃SH,
[(C₁₅H₃₁O-(CH₂-CH₂O)₃](EtO)₂Si(CH₂)₃SH,
[(C₁₅H₃₁O-(CH₂-CH₂O)₄](EtO)₂Si(CH₂)₃SH,
[(C₁₅H₃₁O-(CH₂-CH₂O)₅](EtO)₂Si(CH₂)₃SH,
[(C₁₅H₃₁O-(CH₂-CH₂O)₆](EtO)₂Si(CH₂)₃SH,

[(C₁₆H₃₃O-(CH₂-CH₂O)₂](EtO)₂Si(CH₂)₃SH,
[(C₁₆H₃₃O-(CH₂-CH₂O)₃](EtO)₂Si(CH₂)₃SH,
[(C₁₆H₃₃O-(CH₂-CH₂O)₄](EtO)₂Si(CH₂)₃SH,
[(C₁₆H₃₃O-(CH₂-CH₂O)₅](EtO)₂Si(CH₂)₃SH,
[(C₁₆H₃₃O-(CH₂-CH₂O)₆](EtO)₂Si(CH₂)₃SH,

[(C₁₇H₃₅O-(CH₂-CH₂O)₂](EtO)₂Si(CH₂)₃SH,
[(C₁₇H₃₅O-(CH₂-CH₂O)₃](EtO)₂Si(CH₂)₃SH,
[(C₁₇H₃₅O-(CH₂-CH₂O)₄](EtO)₂Si(CH₂)₃SH,
[(C₁₇H₃₅O-(CH₂-CH₂O)₅](EtO)₂Si(CH₂)₃SH,
[(C₁₇H₃₅O-(CH₂-CH₂O)₆](EtO)₂Si(CH₂)₃SH,

[(C₁₁H₂₃O-(CH₂-CH₂O)₂]₂(EtO)Si (CH₂)₃SH,
[(C₁₁H₂₃O-(CH₂-CH₂O)₃]₂(EtO)Si (CH₂)₃SH,
[(C₁₁H₂₃O-(CH₂-CH₂O)₄]₂(EtO)Si (CH₂)₃SH,
[(C₁₁H₂₃O-(CH₂-CH₂O)₅]₂(EtO)Si (CH₂)₃SH,
[(C₁₁H₂₃O-(CH₂-CH₂O)₆]₂(EtO)Si (CH₂)₃SH,

[(C₁₂H₂₅O-(CH₂-CH₂O)₂]₂(EtO) Si (CH₂)₃SH,
[(C₁₂H₂₅O-(CH₂-CH₂O)₃]₂(EtO)Si (CH₂)₃SH,
[(C₁₂H₂₅O-(CH₂-CH₂O)₄]₂(EtO)Si (CH₂)₃SH,
[(C₁₂H₂₅O-(CH₂-CH₂O)₅]₂(EtO)Si (CH₂)₃SH,
[(C₁₂H₂₅O-(CH₂-CH₂O)₆]₂(EtO)Si (CH₂)₃SH,

[(C₁₃H₂₇O-(CH₂-CH₂O)₂]₂(EtO)Si (CH₂)₃SH,
[(C₁₃H₂₇O-(CH₂-CH₂O)₃]₂(EtO)Si (CH₂)₃SH,
[(C₁₃H₂₇O-(CH₂-CH₂O)₄]₂(EtO)Si (CH₂)₃SH,
[(C₁₃H₂₇O-(CH₂-CH₂O)₅]₂(EtO)Si (CH₂)₃SH,
[(C₁₃H₂₇O-(CH₂-CH₂O)₆]₂(EtO)Si (CH₂)₃SH,

[(C₁₄H₂₉O-(CH₂-CH₂O)₂]₂(EtO)Si (CH₂)₃SH,
[(C₁₄H₂₉O-(CH₂-CH₂O)₃]₂(EtO)Si (CH₂)₃SH,
[(C₁₄H₂₉O-(CH₂-CH₂O)₄]₂(EtO)Si (CH₂)₃SH,
[(C₁₄H₂₉O-(CH₂-CH₂O)₅]₂(EtO)Si (CH₂)₃SH,
[(C₁₄H₂₉O-(CH₂-CH₂O)₆]₂(EtO)Si (CH₂)₃SH,

[(C₁₅H₃₁O-(CH₂-CH₂O)₂]₂(EtO)Si (CH₂)₃SH,
[(C₁₅H₃₁O-(CH₂-CH₂O)₃]₂(EtO)Si (CH₂)₃SH,
[(C₁₅H₃₁O-(CH₂-CH₂O)₄]₂(EtO)Si (CH₂)₃SH,
[(C₁₅H₃₁O-(CH₂-CH₂O)₅]₂(EtO)Si (CH₂)₃SH,
[(C₁₅H₃₁O-(CH₂-CH₂O)₆]₂(EtO)Si (CH₂)₃SH,

[(C₁₆H₃₃O-(CH₂-CH₂O)₂]₂(EtO)Si (CH₂)₃SH,
[(C₁₆H₃₃O-(CH₂-CH₂O)₃]₂(EtO)Si (CH₂)₃SH,
[(C₁₆H₃₃O-(CH₂-CH₂O)₄]₂(EtO)Si (CH₂)₃SH,
[(C₁₆H₃₃O-(CH₂-CH₂O)₅]₂(EtO)Si (CH₂)₃SH,
[(C₁₆H₃₃O-(CH₂-CH₂O)₆]₂(EtO)Si (CH₂)₃SH,

[(C₁₇H₃₅O-(CH₂-CH₂O)₂]₂(EtO)Si (CH₂)₃SH,
[(C₁₇H₃₅O-(CH₂-CH₂O)₃]₂(EtO)Si (CH₂)₃SH,
[(C₁₇H₃₅O-(CH₂-CH₂O)₄]₂(EtO)Si (CH₂)₃SH,
[(C₁₇H₃₅O-(CH₂-CH₂O)₅]₂(EtO)Si (CH₂)₃SH,
[(C₁₇H₃₅O-(CH₂-CH₂O)₆]₂(EtO)Si (CH₂)₃SH,

[(C₁₁H₂₃O-(CH₂-CH₂O)₂]₂(HO)Si (CH₂)₃SH,
[(C₁₁H₂₃O-(CH₂-CH₂O)₃]₂(HO)Si (CH₂)₃SH,
[(C₁₁H₂₃O-(CH₂-CH₂O)₄]₂(HO)Si (CH₂)₃SH,
[(C₁₁H₂₃O-(CH₂-CH₂O)₅]₂(HO)Si (CH₂)₃SH,
[(C₁₁H₂₃O-(CH₂-CH₂O)₆]₂(HO)Si (CH₂)₃SH,

[(C₁₂H₂₅O-(CH₂-CH₂O)₂]₂(HO)Si (CH₂)₃SH,
[(C₁₂H₂₅O-(CH₂-CH₂O)₃]₂(HO)Si (CH₂)₃SH,
[(C₁₂H₂₅O-(CH₂-CH₂O)₄]₂(HO)Si (CH₂)₃SH,
[(C₁₂H₂₅O-(CH₂-CH₂O)₅]₂(HO)Si (CH₂)₃SH,
[(C₁₂H₂₅O-(CH₂-CH₂O)₆]₂(HO)Si (CH₂)₃SH,

[(C₁₃H₂₇O-(CH₂-CH₂O)₂]₂(HO)Si (CH₂)₃SH,
[(C₁₃H₂₇O-(CH₂-CH₂O)₃]₂(HO)Si (CH₂)₃SH,
[(C₁₃H₂₇O-(CH₂-CH₂O)₄]₂(HO)Si (CH₂)₃SH,
[(C₁₃H₂₇O-(CH₂-CH₂O)₅]₂(HO)Si (CH₂)₃SH,
[(C₁₃H₂₇O-(CH₂-CH₂O)₆]₂(HO)Si (CH₂)₃SH,

[(C₁₄H₂₉O-(CH₂-CH₂O)₂]₂(HO)Si (CH₂)₃SH,
[(C₁₄H₂₉O-(CH₂-CH₂O)₃]₂(HO)Si (CH₂)₃SH,
[(C₁₄H₂₉O-(CH₂-CH₂O)₄]₂(HO)Si (CH₂)₃SH,
[(C₁₄H₂₉O-(CH₂-CH₂O)₅]₂(HO)Si (CH₂)₃SH,
[(C₁₄H₂₉O-(CH₂-CH₂O)₆]₂(HO)Si (CH₂)₃SH,

[(C₁₅H₃₁O-(CH₂-CH₂O)₂]₂(HO)Si (CH₂)₃SH,
[(C₁₅H₃₁O-(CH₂-CH₂O)₃]₂(HO)Si (CH₂)₃SH,
[(C₁₅H₃₁O-(CH₂-CH₂O)₄]₂(HO)Si (CH₂)₃SH,
[(C₁₅H₃₁O-(CH₂-CH₂O)₅]₂(HO)Si (CH₂)₃SH,
[(C₁₅H₃₁O-(CH₂-CH₂O)₆]₂(HO)Si (CH₂)₃SH,

[(C₁₆H₃₃O-(CH₂-CH₂O)₂]₂(HO)Si (CH₂)₃SH,
[(C₁₆H₃₃O-(CH₂-CH₂O)₃]₂(HO)Si (CH₂)₃SH,
[(C₁₆H₃₃O-(CH₂-CH₂O)₄]₂(HO)Si (CH₂)₃SH,
[(C₁₆H₃₃O-(CH₂-CH₂O)₅]₂(HO)Si (CH₂)₃SH,
[(C₁₆H₃₃O-(CH₂-CH₂O)₆]₂(HO)Si (CH₂)₃SH,

[(C₁₇H₃₅O-(CH₂-CH₂O)₂]₂(HO)Si (CH₂)₃SH,
[(C₁₇H₃₅O-(CH₂-CH₂O)₃]₂(HO)Si (CH₂)₃SH,
[(C₁₇H₃₅O-(CH₂-CH₂O)₄]₂(HO)Si (CH₂)₃SH,
[(C₁₇H₃₅O-(CH₂-CH₂O)₅]₂(HO)Si (CH₂)₃SH,
[(C₁₇H₃₅O-(CH₂-CH₂O)₆]₂(HO)Si (CH₂)₃SH,

[(C₁₁H₂₃O-(CH₂-CH₂O)₂]₃Si(CH₂)₃SH,
[(C₁₁H₂₃O-(CH₂-CH₂O)₃]₃Si(CH₂)₃SH,
[(C₁₁H₂₃O-(CH₂-CH₂O)₄]₃Si(CH₂)₃SH,
[(C₁₁H₂₃O-(CH₂-CH₂O)₅]₃Si(CH₂)₃SH,
[(C₁₁H₂₃O-(CH₂-CH₂O)₆]₃Si(CH₂)₃SH,

[(C₁₂H₂₅O-(CH₂-CH₂O)₂]₃Si(CH₂)₃SH,
[(C₁₂H₂₅O-(CH₂-CH₂O)₃]₃Si(CH₂)₃SH,
[(C₁₂H₂₅O-(CH₂-CH₂O)₄]₃Si(CH₂)₃SH,
[(C₁₂H₂₅O-(CH₂-CH₂O)₅]₃Si(CH₂)₃SH,
[(C₁₂H₂₅O-(CH₂-CH₂O)₆]₃Si(CH₂)₃SH,

[(C₁₃H₂₇O-(CH₂-CH₂O)₂]₃Si(CH₂)₃SH,
[(C₁₃H₂₇O-(CH₂-CH₂O)₃]₃Si(CH₂)₃SH,
[(C₁₃H₂₇O-(CH₂-CH₂O)₄]₃Si(CH₂)₃SH,
[(C₁₃H₂₇O-(CH₂-CH₂O)₅]₃Si(CH₂)₃SH,
[(C₁₃H₂₇O-(CH₂-CH₂O)₆]₃Si(CH₂)₃SH,

[(C₁₄H₂₉O-(CH₂-CH₂O)₂]₃Si(CH₂)₃SH,
[(C₁₄H₂₉O-(CH₂-CH₂O)₃]₃Si(CH₂)₃SH,
[(C₁₄H₂₉O-(CH₂-CH₂O)₄]₃Si(CH₂)₃SH,
[(C₁₄H₂₉O-(CH₂-CH₂O)₅]₃Si(CH₂)₃SH,
[(C₁₄H₂₉O-(CH₂-CH₂O)₆]₃Si(CH₂)₃SH,

[(C₁₅H₃₁O-(CH₂-CH₂O)₂]₃Si(CH₂)₃SH,
[(C₁₅H₃₁O-(CH₂-CH₂O)₃]₃Si(CH₂)₃SH,
[(C₁₅H₃₁O-(CH₂-CH₂O)₄]₃Si(CH₂)₃SH,
[(C₁₅H₃₁O-(CH₂-CH₂O)₅]₃Si(CH₂)₃SH,
[(C₁₅H₃₁O-(CH₂-CH₂O)₆]₃Si(CH₂)₃SH,

[(C₁₆H₃₃O-(CH₂-CH₂O)₂]₃Si(CH₂)₃SH,
[(C₁₆H₃₃O-(CH₂-CH₂O)₃]₃Si(CH₂)₃SH,
[(C₁₆H₃₃O-(CH₂-CH₂O)₄]₃Si(CH₂)₃SH,
[(C₁₆H₃₃O-(CH₂-CH₂O)₅]₃Si(CH₂)₃SH,
[(C₁₆H₃₃O-(CH₂-CH₂O)₆]₃Si(CH₂)₃SH,

[(C₁₇H₃₅O-(CH₂-CH₂O)₂]₃Si(CH₂)₃SH,
[(C₁₇H₃₅O-(CH₂-CH₂O)₃]₃Si(CH₂)₃SH,
[(C₁₇H₃₅O-(CH₂-CH₂O)₄]₃Si(CH₂)₃SH,
[(C₁₇H₃₅O-(CH₂-CH₂O)₅]₃Si(CH₂)₃SH,
[(C₁₇H₃₅O-(CH₂-CH₂O)₆]₃Si(CH₂)₃SH,

[(C₁₂H₂₅O-(CH₂-CH₂O)₂](EtO)₂Si-CH₂-CH(CH₃)-CH₂-SH,
[(C₁₂H₂₅O-(CH₂-CH₂O)₃](EtO)₂Si-CH₂-CH(CH₃)-CH₂-SH,
[(C₁₂H₂₅O-(CH₂-CH₂O)₄](EtO)₂Si-CH₂-CH(CH₃)-CH₂-SH,
[(C₁₂H₂₅O-(CH₂-CH₂O)₅](EtO)₂Si-CH₂-CH(CH₃)-CH₂-SH,
[(C₁₂H₂₅O-(CH₂-CH₂O)₆](EtO)₂Si-CH₂-CH(CH₃)-CH₂-SH,

[(C₁₃H₂₇O-(CH₂-CH₂O)₂](EtO)₂Si-CH₂-CH(CH₃)-CH₂-SH,
[(C₁₃H₂₇O-(CH₂-CH₂O)₃](EtO)₂Si-CH₂-CH(CH₃)-CH₂-SH,
[(C₁₃H₂₇O-(CH₂-CH₂O)₄](EtO)₂Si-CH₂-CH(CH₃)-CH₂-SH,
[(C₁₃H₂₇O-(CH₂-CH₂O)₅](EtO)₂Si-CH₂-CH(CH₃)-CH₂-SH,
[(C₁₃H₂₇O-(CH₂-CH₂O)₆](EtO)₂Si-CH₂-CH(CH₃)-CH₂-SH,

[(C₁₄H₂₉O-(CH₂-CH₂O)₂](EtO)₂Si-CH₂-CH(CH₃)-CH₂-SH,
[(C₁₄H₂₉O-(CH₂-CH₂O)₃](EtO)₂Si-CH₂-CH(CH₃)-CH₂-SH,
[(C₁₄H₂₉O-(CH₂-CH₂O)₄](EtO)₂Si-CH₂-CH(CH₃)-CH₂-SH,
[(C₁₄H₂₉O-(CH₂-CH₂O)₅](EtO)₂Si-CH₂-CH(CH₃)-CH₂-SH,
[(C₁₄H₂₉O-(CH₂-CH₂O)₆](EtO)₂Si-CH₂-CH(CH₃)-CH₂-SH,

[(C₁₅H₃₁O-(CH₂-CH₂O)₂](EtO)₂Si-CH₂-CH(CH₃)-CH₂-SH,
[(C₁₅H₃₁O-(CH₂-CH₂O)₃](EtO)₂Si-CH₂-CH(CH₃)-CH₂-SH,
[(C₁₅H₃₁O-(CH₂-CH₂O)₄](EtO)₂Si-CH₂-CH(CH₃)-CH₂-SH,
[(C₁₅H₃₁O-(CH₂-CH₂O)₅](EtO)₂Si-CH₂-CH(CH₃)-CH₂-SH,
[(C₁₅H₃₁O-(CH₂-CH₂O)₆](EtO)₂Si-CH₂-CH(CH₃)-CH₂-SH,

[(C₁₆H₃₃O-(CH₂-CH₂O)₂](EtO)₂Si-CH₂-CH(CH₃)-CH₂-SH,
[(C₁₆H₃₃O-(CH₂-CH₂O)₃](EtO)₂Si-CH₂-CH(CH₃)-CH₂-SH,
[(C₁₆H₃₃O-(CH₂-CH₂O)₄](EtO)₂Si-CH₂-CH(CH₃)-CH₂-SH,
[(C₁₆H₃₃O-(CH₂-CH₂O)₅](EtO)₂Si-CH₂-CH(CH₃)-CH₂-SH,
[(C₁₆H₃₃O-(CH₂-CH₂O)₆](EtO)₂Si-CH₂-CH(CH₃)-CH₂-SH,

[(C₁₂H₂₅O-(CH₂-CH₂O)₂]₂(EtO)Si-CH₂-CH(CH₃)-CH₂-SH,
[(C₁₂H₂₅O-(CH₂-CH₂O)₃]₂(EtO)Si-CH₂-CH(CH₃)-CH₂-SH,
[(C₁₂H₂₅O-(CH₂-CH₂O)₄]₂(EtO)Si-CH₂-CH(CH₃)-CH₂-SH,
[(C₁₂H₂₅O-(CH₂-CH₂O)₅]₂(EtO)Si-CH₂-CH(CH₃)-CH₂-SH,
[(C₁₂H₂₅O-(CH₂-CH₂O)₆]₂(EtO)Si-CH₂-CH(CH₃)-CH₂-SH,

[(C₁₃H₂₇O-(CH₂-CH₂O)₂]₂(EtO)Si-CH₂-CH(CH₃)-CH₂-SH,
[(C₁₃H₂₇O-(CH₂-CH₂O)₃]₂(EtO)Si-CH₂-CH(CH₃)-CH₂-SH,
[(C₁₃H₂₇O-(CH₂-CH₂O)₄]₂(EtO)Si-CH₂-CH(CH₃)-CH₂-SH,
[(C₁₃H₂₇O-(CH₂-CH₂O)₅]₂(EtO)Si-CH₂-CH(CH₃)-CH₂-SH,
[(C₁₃H₂₇O-(CH₂-CH₂O)₆]₂(EtO)Si-CH₂-CH(CH₃)-CH₂-SH,

[(C₁₄H₂₉O-(CH₂-CH₂O)₂]₂(EtO)Si-CH₂-CH(CH₃)-CH₂-SH,
[(C₁₄H₂₉O-(CH₂-CH₂O)₃]₂(EtO)Si-CH₂-CH(CH₃)-CH₂-SH,
[(C₁₄H₂₉O-(CH₂-CH₂O)₄]₂(EtO)Si-CH₂-CH(CH₃)-CH₂-SH,
[(C₁₄H₂₉O-(CH₂-CH₂O)₅]₂(EtO)Si-CH₂-CH(CH₃)-CH₂-SH,
[(C₁₄H₂₉O-(CH₂-CH₂O)₆]₂(EtO)Si-CH₂-CH(CH₃)-CH₂-SH,

[(C₁₅H₃₁O-(CH₂-CH₂O)₂]₂(EtO)Si-CH₂-CH(CH₃)-CH₂-SH,
[(C₁₅H₃₁O-(CH₂-CH₂O)₃]₂(EtO)Si-CH₂-CH(CH₃)-CH₂-SH,
[(C₁₅H₃₁O-(CH₂-CH₂O)₄]₂(EtO)Si-CH₂-CH(CH₃)-CH₂-SH,
[(C₁₅H₃₁O-(CH₂-CH₂O)₅]₂(EtO)Si-CH₂-CH(CH₃)-CH₂-SH,
[(C₁₅H₃₁O-(CH₂-CH₂O)₆]₂(EtO)Si-CH₂-CH(CH₃)-CH₂-SH,

[(C₁₆H₃₃O-(CH₂-CH₂O)₂]₂(EtO)Si-CH₂-CH(CH₃)-CH₂-SH,
[(C₁₆H₃₃O-(CH₂-CH₂O)₃]₂(EtO)Si-CH₂-CH(CH₃)-CH₂-SH,
[(C₁₆H₃₃O-(CH₂-CH₂O)₄]₂(EtO)Si-CH₂-CH(CH₃)-CH₂-SH,
[(C₁₆H₃₃O-(CH₂-CH₂O)₅]₂(EtO)Si-CH₂-CH(CH₃)-CH₂-SH,
[(C₁₆H₃₃O-(CH₂-CH₂O)₆]₂(EtO)Si-CH₂-CH(CH₃)-CH₂-SH,

[(C₁₂H₂₅O-(CH₂-CH₂O)₂]₂(HO)Si-CH₂-CH(CH₃)-CH₂-SH,
[(C₁₂H₂₅O-(CH₂-CH₂O)₃]₂(HO)Si-CH₂-CH(CH₃)-CH₂-SH,
[(C₁₂H₂₅O-(CH₂-CH₂O)₄]₂(HO)Si-CH₂-CH(CH₃)-CH₂-SH,
[(C₁₂H₂₅O-(CH₂-CH₂O)₅]₂(HO)Si-CH₂-CH(CH₃)-CH₂-SH,
[(C₁₂H₂₅O-(CH₂-CH₂O)₆]₂(HO)Si-CH₂-CH(CH₃)-CH₂-SH,

[(C₁₃H₂₇O-(CH₂-CH₂O)₂]₂(HO)Si-CH₂-CH(CH₃)-CH₂-SH,
[(C₁₃H₂₇O-(CH₂-CH₂O)₃]₂(HO)Si-CH₂-CH(CH₃)-CH₂-SH,
[(C₁₃H₂₇O-(CH₂-CH₂O)₄]₂(HO)Si-CH₂-CH(CH₃)-CH₂-SH,
[(C₁₃H₂₇O-(CH₂-CH₂O)₅]₂(HO)Si-CH₂-CH(CH₃)-CH₂-SH,
[(C₁₃H₂₇O-(CH₂-CH₂O)₆]₂(HO)Si-CH₂-CH(CH₃)-CH₂-SH,

[(C₁₄H₂₉O-(CH₂-CH₂O)₂]₂(HO)Si-CH₂-CH(CH₃)-CH₂-SH,
[(C₁₄H₂₉O-(CH₂-CH₂O)₃]₂(HO)Si-CH₂-CH(CH₃)-CH₂-SH,
[(C₁₄H₂₉O-(CH₂-CH₂O)₄]₂(HO)Si-CH₂-CH(CH₃)-CH₂-SH,
[(C₁₄H₂₉O-(CH₂-CH₂O)₅]₂(HO)Si-CH₂-CH(CH₃)-CH₂-SH,
[(C₁₄H₂₉O-(CH₂-CH₂O)₆]₂(HO)Si-CH₂-CH(CH₃)-CH₂-SH,

[(C₁₅H₃₁O-(CH₂-CH₂O)₂]₂(HO)Si-CH₂-CH(CH₃)-CH₂-SH,
[(C₁₅H₃₁O-(CH₂-CH₂O)₃]₂(HO)Si-CH₂-CH(CH₃)-CH₂-SH,
[(C₁₅H₃₁O-(CH₂-CH₂O)₄]₂(HO)Si-CH₂-CH(CH₃)-CH₂-SH,
[(C₁₅H₃₁O-(CH₂-CH₂O)₅]₂(HO)Si-CH₂-CH(CH₃)-CH₂-SH,
[(C₁₅H₃₁O-(CH₂-CH₂O)₆]₂(HO)Si-CH₂-CH(CH₃)-CH₂-SH,

[(C₁₆H₃₃O-(CH₂-CH₂O)₂]₂(HO)Si-CH₂-CH(CH₃)-CH₂-SH,
[(C₁₆H₃₃O-(CH₂-CH₂O)₃]₂(HO)Si-CH₂-CH(CH₃)-CH₂-SH,
[(C₁₆H₃₃O-(CH₂-CH₂O)₄]₂(HO)Si-CH₂-CH(CH₃)-CH₂-SH,
[(C₁₆H₃₃O-(CH₂-CH₂O)₅]₂(HO)Si-CH₂-CH(CH₃)-CH₂-SH,
[(C₁₆H₃₃O-(CH₂-CH₂O)₆]₂(HO)Si-CH₂-CH(CH₃)-CH₂-SH,

[(C₁₂H₂₅O-(CH₂-CH₂O)₂]₃Si-CH₂-CH(CH₃)-CH₂-SH,
[(C₁₂H₂₅O-(CH₂-CH₂O)₃]₃Si-CH₂-CH(CH₃)-CH₂-SH,
[(C₁₂H₂₅O-(CH₂-CH₂O)₄]₃Si-CH₂-CH(CH₃)-CH₂-SH,
[(C₁₂H₂₅O-(CH₂-CH₂O)₅]₃Si-CH₂-CH(CH₃)-CH₂-SH,
[(C₁₂H₂₅O-(CH₂-CH₂O)₆]₃Si-CH₂-CH(CH₃)-CH₂-SH,

[(C₁₃H₂₇O-(CH₂-CH₂O)₂]₃Si-CH₂-CH(CH₃)-CH₂-SH,
[(C₁₃H₂₇O-(CH₂-CH₂O)₃]₃Si-CH₂-CH(CH₃)-CH₂-SH,
[(C₁₃H₂₇O-(CH₂-CH₂O)₄]₃Si-CH₂-CH(CH₃)-CH₂-SH,
[(C₁₃H₂₇O-(CH₂-CH₂O)₅]₃Si-CH₂-CH(CH₃)-CH₂-SH,
[(C₁₃H₂₇O-(CH₂-CH₂O)₆]₃Si-CH₂-CH(CH₃)-CH₂-SH,

[(C₁₄H₂₉O-(CH₂-CH₂O)₂]₃Si-CH₂-CH(CH₃)-CH₂-SH,
[(C₁₄H₂₉O-(CH₂-CH₂O)₃]₃Si-CH₂-CH(CH₃)-CH₂-SH,
[(C₁₄H₂₉O-(CH₂-CH₂O)₄]₃Si-CH₂-CH(CH₃)-CH₂-SH,
[(C₁₄H₂₉O-(CH₂-CH₂O)₅]₃Si-CH₂-CH(CH₃)-CH₂-SH,
[(C₁₄H₂₉O-(CH₂-CH₂O)₆]₃Si-CH₂-CH(CH₃)-CH₂-SH,

[(C₁₅H₃₁O-(CH₂-CH₂O)₂]₃Si-CH₂-CH(CH₃)-CH₂-SH,
[(C₁₅H₃₁O-(CH₂-CH₂O)₃]₃Si-CH₂-CH(CH₃)-CH₂-SH,
[(C₁₅H₃₁O-(CH₂-CH₂O)₄]₃Si-CH₂-CH(CH₃)-CH₂-SH,
[(C₁₅H₃₁O-(CH₂-CH₂O)₅]₃Si-CH₂-CH(CH₃)-CH₂-SH,
[(C₁₅H₃₁O-(CH₂-CH₂O)₆]₃Si-CH₂-CH(CH₃)-CH₂-SH,

[(C₁₆H₃₃O-(CH₂-CH₂O)₂]₃Si-CH₂-CH(CH₃)-CH₂-SH,
[(C₁₆H₃₃O-(CH₂-CH₂O)₃]₃Si-CH₂-CH(CH₃)-CH₂-SH,
[(C₁₆H₃₃O-(CH₂-CH₂O)₄]₃Si-CH₂-CH(CH₃)-CH₂-SH,
[(C₁₆H₃₃O-(CH₂-CH₂O)₅]₃Si-CH₂-CH(CH₃)-CH₂-SH oder
[(C₁₆H₃₃O-(CH₂-CH₂O)₆]₃Si-CH₂-CH(CH₃)-CH₂-SH, wobei die Alkylketten C₁₁-C₁₇ linear oder verzweigt sein können.

Bevorzugte Verbindungen der Formel I mit R² = CN können beispielsweise sein:
[(C₁₁H₂₃O-(CH₂-CH₂O)₂]Me₂Si(CH₂)₃SCN,
[(C₁₁H₂₃O-(CH₂-CH₂O)₃]Me₂Si(CH₂)₃SCN,
(C₁₁H₂₃O-(CH₂-CH₂O)₄]Me₂Si(CH₂)₃SCN,
[(C₁₁H₂₃O-(CH₂-CH₂O)₅]Me₂Si(CH₂)₃SCN,
[(C₁₁H₂₃O-(CH₂-CH₂O)₆]Me₂Si(CH₂)₃SCN,

[(C₁₂H₂₅O-(CH₂-CH₂O)₂]Me₂Si(CH₂)₃SCN,
[(C₁₂H₂₅O-(CH₂-CH₂O)₃]Me₂Si(CH₂)₃SCN,
[(C₁₂H₂₅O-(CH₂-CH₂O)₄]Me₂Si(CH₂)₃SCN,
[(C₁₂H₂₅O-(CH₂-CH₂O)₅]Me₂Si(CH₂)₃SCN,
[(C₁₂H₂₅O-(CH₂-CH₂O)₆]Me₂Si(CH₂)₃SCN,

[(C₁₃H₂₇O-(CH₂-CH₂O)₂]Me₂Si(CH₂)₃SCN,
[(C₁₃H₂₇O-(CH₂-CH₂O)₃]Me₂Si(CH₂)₃SCN,
[(C₁₃H₂₇O-(CH₂-CH₂O)₄]Me₂Si(CH₂)₃SCN,
[(C₁₃H₂₇O-(CH₂-CH₂O)₅]Me₂Si(CH₂)₃SCN,
[(C₁₃H₂₇O-(CH₂-CH₂O)₆]Me₂Si(CH₂)₃SCN,

[(C₁₄H₂₉O-(CH₂-CH₂O)₂]Me₂Si(CH₂)₃SCN,
[(C₁₄H₂₉O-(CH₂-CH₂O)₃]Me₂Si(CH₂)₃SCN,
[(C₁₄H₂₉O-(CH₂-CH₂O)₄]Me₂Si(CH₂)₃SCN,
[(C₁₄H₂₉O-(CH₂-CH₂O)₅]Me₂Si(CH₂)₃SCN,
[(C₁₄H₂₉O-(CH₂-CH₂O)₆]Me₂Si(CH₂)₃SCN,

[(C₁₁H₂₃O-(CH₂-CH₂O)₂](MeO)₂Si(CH₂)₃SCN,
[(C₁₁H₂₃O-(CH₂-CH₂O)₃](MeO)₂Si(CH₂)₃SCN,
[(C₁₁H₂₃O-(CH₂-CH₂O)₄](MeO)₂Si(CH₂)₃SCN,
[(C₁₁H₂₃O-(CH₂-CH₂O)₅](MeO)₂Si(CH₂)₃SCN,
[(C₁₁H₂₃O-(CH₂-CH₂O)₆](MeO)₂Si(CH₂)₃SCN,

[(C₁₂H₂₅O-(CH₂-CH₂O)₂](MeO)₂Si(CH₂)₃SCN,
[(C₁₂H₂₅O-(CH₂-CH₂O)₃](MeO)₂Si(CH₂)₃SCN,
[(C₁₂H₂₅O-(CH₂-CH₂O)_{4]}(MeO)₂Si(CH₂)₃SCN,
[(C₁₂H₂₅O-(CH₂-CH₂O)₅](MeO)₂Si(CH₂)₃SCN,
[(C₁₂H₂₅O-(CH₂-CH₂O)₆](MeO)₂Si(CH₂)₃SCN,

[(C₁₃H₂₇O-(CH₂-CH₂O)₂](MeO)₂Si(CH₂)₃SCN,
[(C₁₃H₂₇O-(CH₂-CH₂O)₃](MeO)₂Si(CH₂)₃SCN,
[(C₁₃H₂₇O-(CH₂-CH₂O)₄](MeO)₂Si(CH₂)₃SCN,
[(C₁₃H₂₇O-(CH₂-CH₂O)₅](MeO)₂Si(CH₂)₃SCN,
[(C₁₃H₂₇O-(CH₂-CH₂O)₆](MeO)₂Si(CH₂)₃SCN,

[(C₁₄H₂₉O-(CH₂-CH₂O)₂](MeO)₂Si(CH₂)₃SCN,
[(C₁₄H₂₉O-(CH₂-CH₂O)₃](MeO)₂Si(CH₂)₃SCN,
[(C₁₄H₂₉O-(CH₂-CH₂O)₄](MeO)₂Si(CH₂)₃SCN,
[(C₁₄H₂₉O-(CH₂-CH₂O)₅](MeO)₂Si(CH₂)₃SCN,
[(C₁₄H₂₉O-(CH₂-CH₂O)₆](MeO)₂Si(CH₂)₃SCN,

[(C₁₁H₂₃O-(CH₂-CH₂O)₂]₂(MeO)Si(CH₂)₃SCN,
[(C₁₁H₂₃O-(CH₂-CH₂O)₃]₂(MeO)Si(CH₂)₃SCN,
[(C₁₁H₂₃O-(CH₂-CH₂O)₄]₂(MeO)Si(CH₂)₃SCN,
[(C₁₁H₂₃O-(CH₂-CH₂O)₅]₂(MeO)Si(CH₂)₃SCN,
[(C₁₁H₂₃O-(CH₂-CH₂O)₆]₂(MeO)Si(CH₂)₃SCN,

[(C₁₂H₂₅O-(CH₂-CH₂O)₂]₂(MeO)Si(CH₂)₃SCN,
[(C₁₂H₂₅O-(CH₂-CH₂O)₃]₂(MeO)Si(CH₂)₃SCN,
[(C₁₂H₂₅O-(CH₂-CH₂O)₄]₂(MeO)Si(CH₂)₃SCN,
[(C₁₂H₂₅O-(CH₂-CH₂O)₅]₂(MeO)Si(CH₂)₃SCN,
[(C₁₂H₂₅O-(CH₂-CH₂O)₆]₂(MeO)Si(CH₂)₃SCN,

[(C₁₃H₂₇O-(CH₂-CH₂O)₂]₂(MeO)Si(CH₂)₃SCN,
[(C₁₃H₂₇O-(CH₂-CH₂O)₃]₂(MeO)Si(CH₂)₃SCN,
[(C₁₃H₂₇O-(CH₂-CH₂O)₄]₂(MeO)Si(CH₂)₃SCN,
[(C₁₃H₂₇O-(CH₂-CH₂O)₅]₂(MeO)Si(CH₂)₃SCN,
[(C₁₃H₂₇O-(CH₂-CH₂O)₆]₂(MeO)Si(CH₂)₃SCN,

[(C₁₄H₂₉O-(CH₂-CH₂O)₂]₂(MeO)Si(CH₂)₃SCN,
[(C₁₄H₂₉O-(CH₂-CH₂O)₃]₂(MeO)Si(CH₂)₃SCN,
[(C₁₄H₂₉O-(CH₂-CH₂O)₄]₂(MeO)Si(CH₂)₃SCN,
[(C₁₄H₂₉O-(CH₂-CH₂O)₅]₂(MeO)Si(CH₂)₃SCN,
[(C₁₄H₂₉O-(CH₂-CH₂O)₆]₂(MeO)Si(CH₂)₃SCN,

[(C₁₁H₂₃O-(CH₂-CH₂O)₂](EtO)₂Si(CH₂)₃SCN,
[(C₁₁H₂₃O-(CH₂-CH₂O)₃](EtO)₂Si(CH₂)₃SCN,
[(C₁₁H₂₃O-(CH₂-CH₂O)₄](EtO)₂Si(CH₂)₃SCN,
[(C₁₁H₂₃O-(CH₂-CH₂O)₅](EtO)₂Si(CH₂)₃SCN,
[(C₁₁H₂₃O-(CH₂-CH₂O)₆](EtO)₂Si(CH₂)₃SCN,

[(C₁₂H₂₅O-(CH₂-CH₂O)₂](EtO)₂Si(CH₂)₃SCN,
[(C₁₂H₂₅O-(CH₂-CH₂O)₃](EtO)₂Si(CH₂)₃SCN,
[(C₁₂H₂₅O-(CH₂-CH₂O)₄](EtO)₂Si(CH₂)₃SCN,
[(C₁₂H₂₅O-(CH₂-CH₂O)₅](EtO)₂Si(CH₂)₃SCN,
[(C₁₂H₂₅O-(CH₂-CH₂O)₆](EtO)₂Si(CH₂)₃SCN,

[(C₁₃H₂₇O-(CH₂-CH₂O)₂](EtO)₂Si(CH₂)₃SCN,
[(C₁₃H₂₇O-(CH₂-CH₂O)₃](EtO)₂Si(CH₂)₃SCN,
[(C₁₃H₂₇O-(CH₂-CH₂O)₄](EtO)₂Si(CH₂)₃SCN,
[(C₁₃H₂₇O-(CH₂-CH₂O)₅](EtO)₂Si(CH₂)₃SCN,
[(C₁₃H₂₇O-(CH₂-CH₂O)₆](EtO)₂Si(CH₂)₃SCN,

[(C₁₄H₂₉O-(CH₂-CH₂O)₂](EtO)₂Si(CH₂)₃SCN,
[(C₁₄H₂₉O-(CH₂-CH₂O)₃](EtO)₂Si(CH₂)₃SCN,
[(C₁₄H₂₉O-(CH₂-CH₂O)₄](EtO)₂Si(CH₂)₃SCN,
[(C₁₄H₂₉O-(CH₂-CH₂O)₅](EtO)₂Si(CH₂)₃SCN,
[(C₁₄H₂₉O-(CH₂-CH₂O)₆](EtO)₂Si(CH₂)₃SCN,

[(C₁₁H₂₃O-(CH₂-CH₂O)₂]₂(EtO)Si(CH₂)₃SCN,
[(C₁₁H₂₃O-(CH₂-CH₂O)₃]₂(EtO)Si(CH₂)₃SCN,
[(C₁₁H₂₃O-(CH₂-CH₂O)₄]₂(EtO)Si(CH₂)₃SCN,
[(C₁₁H₂₃O-(CH₂-CH₂O)₅]₂(EtO)Si(CH₂)₃SCN,
[(C₁₁H₂₃O-(CH₂-CH₂O)₆]₂(EtO)Si(CH₂)₃SCN,

[(C₁₂H₂₅O-(CH₂-CH₂O)₂]₂(EtO)Si(CH₂)₃SCN,
[(C₁₂H₂₅O-(CH₂-CH₂O)₃]₂(EtO)Si(CH₂)₃SCN,
[(C₁₂H₂₅O-(CH₂-CH₂O)₄]₂(EtO)Si(CH₂)₃SCN,
[(C₁₂H₂₅O-(CH₂-CH₂O)₅]₂(EtO)Si(CH₂)₃SCN,
[(C₁₂H₂₅O-(CH₂-CH₂O)₆]₂(EtO)Si(CH₂)₃SCN,

[(C₁₃H₂₇O-(CH₂-CH₂O)₂]₂(EtO)Si(CH₂)₃SCN,
[(C₁₃H₂₇O-(CH₂-CH₂O)₃]₂(EtO)Si(CH₂)₃SCN,
[(C₁₃H₂₇O-(CH₂-CH₂O)₄]₂(EtO)Si(CH₂)₃SCN,
[(C₁₃H₂₇O-(CH₂-CH₂O)₅]₂(EtO)Si(CH₂)₃SCN,
[(C₁₃H₂₇O-(CH₂-CH₂O)₆]₂(EtO)Si(CH₂)₃SCN,

[(C₁₄H₂₉O-(CH₂-CH₂O)₂]₂(EtO)Si(CH₂)₃SCN,
[(C₁₄H₂₉O-(CH₂-CH₂O)₃]₂(EtO)Si(CH₂)₃SCN,
[(C₁₄H₂₉O-(CH₂-CH₂O)₄]₂(EtO)Si(CH₂)₃SCN,
[(C₁₄H₂₉O-(CH₂-CH₂O)₅]₂(EtO)Si(CH₂)₃SCN,
[(C₁₄H₂₉O-(CH₂-CH₂O)₆]₂(EtO)Si(CH₂)₃SCN,

[(C₁₁H₂₃O-(CH₂-CH₂O)₂]₃Si(CH₂)₃SCN,
[(C₁₁H₂₃O-(CH₂-CH₂O)₃]₃Si(CH₂)₃SCN,
[(C₁₁H₂₃O-(CH₂-CH₂O)₄]₃Si(CH₂)₃SCN,
[(C₁₁H₂₃O-(CH₂-CH₂O)₅]₃Si(CH₂)₃SCN,
[(C₁₁H₂₃O-(CH₂-CH₂O)₆]₃Si(CH₂)₃SCN,

[(C₁₂H₂₅O-(CH₂-CH₂O)₂]₃Si(CH₂)₃SCN,
[(C₁₂H₂₅O-(CH₂-CH₂O)₃]₃Si(CH₂)₃SCN,
[(C₁₂H₂₅O-(CH₂-CH₂O)₄]₃Si(CH₂)₃SCN,
[(C₁₂H₂₅O-(CH₂-CH₂O)₅]₃Si(CH₂)₃SCN,
[C₁₂H₂₅O-(CH₂-CH₂O)₆]₃Si(CH₂)₃SCN,

[(C₁₃H₂₇O-(CH₂-CH₂O)₂]₃Si(CH₂)₃SCN,
[(C₁₃H₂₇O-(CH₂-CH₂O)₃]₃Si(CH₂)₃SCN,
[(C₁₃H₂₇O-(CH₂-CH₂O)₄]₃Si(CH₂)₃SCN,
[(C₁₃H₂₇O-(CH₂-CH₂O)₅]₃Si(CH₂)₃SCN,
[(C₁₃H₂₇O-(CH₂-CH₂O)₆]₃Si(CH₂)₃SCN,

[(C₁₄H₂₉O-(CH₂-CH₂O)₂]₃Si(CH₂)₃SCN,
[(C₁₄H₂₉O-(CH₂-CH₂O)₃]₃Si(CH₂)₃SCN,
[(C₁₄H₂₉O-(CH₂-CH₂O)₄]₃Si(CH₂)₃SCN,
[(C₁₄H₂₉O-(CH₂-CH₂O)₅]₃Si(CH₂)₃SCN oder
[(C₁₄H₂₉O-(CH₂-CH₂O)₆]₃Si(CH₂)₃SCN, wobei die Alkylketten C₁₁-C₁₄ linear oder verzweigt sein können.

Bevorzugte Verbindungen der Formel I mit R² = -C(=O)-R⁴ und R⁴ = -C₅H₁₁, -C₆H₁₃, -C₇H₁₅, -C₈H₁₇, -C₉H₁₉, -C₁₀H₂₁, -C₁₁H₂₃, -C₁₂H₂₅, - C₁₃H₂₇, -C₁₄H₂₉, -C₁₅H₃₁, -C₁₆H₃₃, -C₁₇H₃₅ und -C₆H₅ (Phenyl) können beispielsweise sein:
[(C₁₁H₂₃O-(CH₂-CH₂O)₂]Me₂Si(CH₂)₃-S-C(=O)-R⁴,
[(C₁₁H₂₃O-(CH₂-CH₂O)₃]Me₂Si(CH₂)₃-S-C(=O)-R⁴,
[(C₁₁H₂₃O-(CH₂-CH₂O)₄]Me₂Si(CH₂)₃-S-C(=O)-R⁴,
[(C₁₁H₂₃O-(CH₂-CH₂O)₅]Me₂Si(CH₂)₃-S-C(=O)-R⁴,
[(C₁₁H₂₃O-(CH₂-CH₂O)₆]MeSi(CH₂)₃-S-C(=O)-R⁴,

[(C₁₂H₂₅O-(CH₂-CH₂O)₂]Me₂Si(CH₂)₃-S-C(=O)-R⁴,
[(C₁₂H₂₅O-(CH₂-CH₂O) ₃]Me₂Si(CH₂)₃-S-C(=O)-R⁴,
[(C₁₂H₂₅O-(CH₂-CH₂O)₄]Me₂Si(CH₂)₃-S-C(=O)-R⁴,
[(C₁₂H₂₅O-(CH₂-CH₂O)₅]Me₂Si(CH₂)₃-S-C(=O)-R⁴,
[(C₁₂H₂₅O-(CH₂-CH₂O)₆]MeSi(CH₂)₃-S-C(=O)-R⁴,

[(C₁₃H₂₇O-(CH₂-CH₂O)₂]Me₂Si(CH₂)₃-S-C(=O)-R⁴,
[(C₁₃H₂₇O-(CH₂-CH₂O)₃]Me₂Si(CH₂)₃-S-C(=O) -R⁴,
[(C₁₃H₂₇O-(CH₂-CH₂O)₄]Me₂Si(CH₂)₃-S-C(=O)-R⁴,
[(C₁₃H₂₇O-(CH₂-CH₂O)₅]Me₂Si(CH₂)₃-S-C(=O)-R⁴,
[(C₁₃H₂₇O-(CH₂-CH₂O)₆]Me₂Si(CH₂)₃-S-C(=O)-R⁴,

[(C₁₄H₂₉O-(CH₂-CH₂O)₂]Me₂Si(CH₂)₃-S-C(=O)-R⁴,
[(C₁₄H₂₉O-(CH₂-CH₂O)₃]Me₂Si(CH₂)₃-S-C(=O)-R⁴,
[(C₁₄H₂₉O-(CH₂-CH₂O)₄]Me₂Si(CH₂)₃-S-C(=O)-R⁴,
[(C₁₄H₂₉O-(CH₂-CH₂O)₅]Me₂Si(CH₂)₃-S-C(=O)-R⁴,
[(C₁₄H₂₉O-(CH₂-CH₂O)₆]Me₂Si (CH₂)₃-S-C(=O)-R⁴,

[(C₁₁H₂₃O-(CH₂-CH₂O)₂](MeO)₂Si(CH₂)₃-S-C(=O)-R⁴,
[(C₁₁H₂₃O-(CH₂-CH₂O)₃](MeO)₂Si(CH₂)₃-S-C(=O)-R⁴,
[(C₁₁H₂₃O-(CH₂-CH₂O)₄](MeO)₂Si(CH₂)₃-S-C(=O)-R⁴,
[(C₁₁H₂₃O-(CH₂-CH₂O)₅](MeO)₂Si(CH₂)₃-S-C(=O)-R⁴,
[(C₁₁H₂₃O-(CH₂-CH₂O)₆](MeO)₂Si(CH₂)₃-S-C(=O)-R⁴,

[(C₁₂H₂₅O-(CH₂-CH₂O)₂](MeO)₂Si(CH₂)₃-S-C(=O)-R⁴,
[(C₁₂H₂₅O-(CH₂-CH₂O)₃](MeO)₂Si(CH₂)₃-S-C(=O)-R⁴,
[(C₁₂H₂₅O-(CH₂-CH₂O)₄](MeO)₂Si(CH₂)₃-S-C(=O)-R⁴,
[(C₁₂H₂₅O-(CH₂-CH₂O)₅](MeO)₂Si(CH₂)₃-S-C(=O)-R⁴,
[(C₁₂H₂₅O-(CH₂-CH₂O)₆](MeO)₂Si(CH₂)₃-S-C(=O)-R⁴,

[(C₁₃H₂₇O-C(CH₂-CH₂O)₂](MeO)₂Si(CH₂)₃-S-C(=O)-R⁴,
[(C₁₃H₂₇O-(CH₂-CH₂O)₃](MeO)₂Si(CH₂)₃-S-C(=O)-R⁴,
[(C₁₃H₂₇O-(CH₂-CH₂O)₄](MeO)₂Si(CH₂)₃-S-C(=O)-R⁴,
[(C₁₃H₂₇O-(CH₂-CH₂O)₅](MeO)₂Si(CH₂)₃-S-C(=O)-R⁴,
[(C₁₃H₂₇O-(CH₂-CH₂O)₆](MeO)₂Si(CH₂)₃-S-C(=O)-R⁴,

[(C₁₄H₂₉O-(CH₂-CH₂O)₂](MeO)₂Si(CH₂)₃-S-C(=O)-R⁴,
[(C₁₄H₂₉O-(CH₂-CH₂O)₃](MeO)₂Si(CH₂)₃-S-C(=O)-R⁴,
[(C₁₄H₂₉O-(CH₂-CH₂O)₄](MeO)₂Si(CH₂)₃-S-C(=O)-R⁴,
[(C₁₄H₂₉O-(CH₂-CH₂O)₅](MeO)₂Si(CH₂)₃-S-C(=O)-R⁴,
[(C₁₄H₂₉O-(CH₂-CH₂O)₆](MeO)₂Si(CH₂)₃-S-C(=O)-R⁴,

[(C₁₁H₂₃O-(CH₂-CH₂O)₂]₂(MeO)Si (CH₂)₃-S-C(=O)-R⁴,
[(C₁₁H₂₃O-(CH₂-CH₂O)₃]₂(MeO)Si (CH₂)₃-S-C(=O)-R⁴,
[(C₁₁H₂₃O-(CH₂-CH₂O)₄]₂(MeO)Si (CH₂)₃-S-C(=O)-R⁴,
[(C₁₁H₂₃O-(CH₂-CH₂O)₅]₂(MeO)Si (CH₂)₃-S-C(=O)-R⁴,
[(C₁₁H₂₃O-(CH₂-CH₂O)₆]₂(MeO)Si (CH₂)₃-S-C(=O)-R⁴,

[(C₁₂H₂₅O-(CH₂-CH₂O)₂]₂(MeO)Si (CH₂)₃-S-C(=O)-R⁴,
[(C₁₂H₂₅O-(CH₂-CH₂O)₃]₂(MeO)Si (CH₂)₃-S-C(=O)-R⁴,
[(C₁₂H₂₅O-(CH₂-CH₂O)₄]₂(MeO)Si (CH₂)₃-S-C(=O)-R⁴,
[(C₁₂H₂₅O-(CH₂-CH₂O)₅]₂(MeO)Si (CH₂)₃-S-C(=O)-R⁴,
[(C₁₂H₂₅O-(CH₂-CH₂O)₆]₂(MeO)Si (CH₂)₃-S-C(=O)-R⁴,

[(C₁₃H₂₇O-(CH₂-CH₂O)₂]₂(MeO)Si(CH₂)₃-S-C(=O)-R⁴,
[(C₁₃H₂₇O-(CH₂-CH₂O)₃]₂(MeO)Si (CH₂)₃-S-C(=O)-R⁴,
[(C₁₃H₂₇O-(CH₂-CH₂O)₄]₂(MeO)Si (CH₂)₃-S-C(=O)-R⁴,
[(C₁₃H₂₇O-(CH₂-CH₂O)₅]₂(MeO)Si (CH₂)₃-S-C(=O)-R⁴,
[(C₁₃H₂₇O-(CH₂-CH₂O)₆]₂(MeO)Si (CH₂)₃-S-C(=O)-R⁴,

[(C₁₄H₂₉O-(CH₂-CH₂O)₂]₂(MeO)Si (CH₂)₃-S-C(=O)-R⁴,
[(C₁₄H₂₉O-(CH₂-CH₂O)₃]₂(MeO)Si (CH₂)₃-S-C(=O)-R⁴,
[(C₁₄H₂₉O-(CH₂-CH₂O)₄]₂(MeO)Si (CH₂)₃-S-C(=O)-R⁴,
[(C₁₄H₂₉O-(CH₂-CH₂O)₅]₂(MeO)Si (CH₂)₃-S-C(=O)-R⁴,
[(C₁₄H₂₉O-(CH₂-CH₂O)₆]₂(MeO)Si (CH₂)₃-S-C(=O)-R⁴,

[(C₁₁H₂₃O-(CH₂-CH₂O)₂](EtO)₂Si(CH₂)₃-S-C(=O)-R⁴,
[(C₁₁H₂₃O-(CH₂-CH₂O)₃](EtO)₂Si(CH₂)₃-S-C(=O)-R⁴,
[(C₁₁H₂₃O-(CH₂-CH₂O)₄](EtO)₂Si(CH₂)₃-S-C(=O)-R⁴,
[(C₁₁H₂₃O-(CH₂-CH₂O)₅](EtO)₂Si(CH₂)₃-S-C(=O)-R⁴,
[(C₁₁H₂₃O-(CH₂-CH₂O)₆](EtO)₂Si(CH₂)₃-S-C(=O)-R⁴,

[(C₁₂H₂₅O-(CH₂-CH₂O)₂](EtO)₂Si(CH₂)₃-S-C(=O)-R⁴,
[(C₁₂H₂₅O-(CH₂-CH₂O)₃](EtO)₂Si(CH₂)₃-S-C(=O)-R⁴,
[(C₁₂H₂₅O-(CH₂-CH₂O)₄](EtO)₂Si(CH₂)₃-S-C(=O)-R⁴,
[(C₁₂H₂₅O-(CH₂-CH₂O)₅](EtO)₂Si(CH₂)₃-S-C(=O)-R⁴,
[(C₁₂H₂₅O-(CH₂-CH₂O)₆](EtO)₂Si(CH₂)₃-S-C(=O)-R⁴,

[(C₁₃H₂₇O-(CH₂-CH₂O)₂](EtO)₂Si(CH₂)₃-S-C(=O)-R⁴,
[(C₁₃H₂₇O-(CH₂-CH₂O)₃](EtO)₂Si(CH₂)₃-S-C(=O)-R⁴,
[(C₁₃H₂₇O-(CH₂-CH₂O)₄](EtO)₂Si(CH₂)₃-S-C(=O)-R⁴,
[(C₁₃H₂₇O-(CH₂-CH₂O)₅](EtO)₂Si(CH₂)₃-S-C(=O)-R⁴,
[(C₁₃H₂₇O-(CH₂-CH₂O) ₆](EtO)₂Si(CH₂)₃-S-C(=O)-R⁴,

[(C₁₄H₂₉O-(CH₂-CH₂O)₂](EtO)₂Si(CH₂)₃-S-C(=O)-R⁴,
[(C₁₄H₂₉O-(CH₂-CH₂O)₃](EtO)₂Si(CH₂)₃-S-C(=O)-R⁴,
[(C₁₄H₂₉O-(CH₂-CH₂O) ₄](EtO)₂Si(CH₂)₃-S-C(=O)-R⁴,
[(C₁₄H₂₉O-(CH₂-CH₂O)₅](EtO)₂Si(CH₂)₃-S-C(=O)-R⁴,
[(C₁₄H₂₉O-(CH₂-CH₂O)₆](EtO)₂Si(CH₂)₃-S-C(=O)-R⁴,

[(C₁₁H₂₃O-(CH₂-CH₂O)₂]₂(EtO)Si(CH₂)₃-S-C(=O)-R⁴,
[(CH₂-CH₂O)₃]₂(EtO)Si(CH₂)₃-S-C(=O)-R⁴,
[(C₁₁H₂₃O-(CH₂-CH₂O)₄]₂(EtO)Si(CH₂)₃-S-C(=O)-R⁴,
[(C₁₁H₂₃O-(CH₂-CH₂O)₅]₂(EtO)Si(CH₂)₃-S-C(=O)-R⁴,
[(C₁₁H₂₃O-(CH₂-CH₂O)₆]₂(EtO)Si(CH₂)₃-S-C(=O)-R⁴,

[(C₁₂H₂₇O-(CH₂-CH₂O)₂]₂(EtO)Si(CH₂)₃-S-C(=O)-R⁴,
[(C₁₃H₂₇O-(CH₂-CH₂O)₃]₂(EtO)Si(CH₂)₃-S-C(=O)-R⁴,
[(C₁₂H₂₅O-(CH₂-CH₂O)₄]₂(EtO)Si(CH₂)₃-S-C(=O)-R⁴,
[(C₁₂H₂₅O-(CH₂-CH₂O)₅]₂(EtO)Si(CH₂)₃-S-C(=O)-R⁴,
[(C₁₃H₂₅O-(CH₂-CH₂O)₆]₂(EtO)Si(CH₂)₃-S-C(=O)-R⁴,

[(C₁₃H₂₅O-(CH₂-CH₂O)₂(EtO)Si(CH₂)₃-S-C(=O)-R⁴,
[(C₁₃H₂₇O-(CH₂-CH₂O)₃]₂(EtO)Si(CH₂)₃-S-C(=O)-R⁴,
[(C₁₃H₂₇O-(CH₂-CH₂O)₄]₂(EtO)Si(CH₂)₃-S-C(=O)-R⁴,
[(C₁₃H₂₇O-(CH₂-CH₂O)₅]₂(EtO)Si(CH₂)₃-S-C(=O)-R⁴,
[(C₁₃H₂₇O-(CH₂-CH₂O)₆]₂(EtO)Si(CH₂)₃-S-C(=O)-R⁴,

[(C₁₄H₂₉O-(CH₂-CH₂O)₂]₂(EtO)Si(CH₂)₃-S-C(=O)-R⁴,
[(C₁₄H₂₉O- -(CH₂-CH₂O)₃]₂(EtO)Si(CH₂)₃-S-C(=O)-R⁴,
[(C₁₄H₂₉O-(CH₂-CH₂O)₄]₂(EtO)Si(CH₂)₃-S-C(=O)-R⁴,
[(C₁₄H₂₉O-(CH₂-CH₂O)₅]₂(EtO)Si(CH₂)₃-S-C(=O)-R⁴,
[(C₁₄H₂₉O-(CH₂-CH₂O)₆]₂(EtO)Si(CH₂)₃-S-C(=O)-R⁴,

[(C₁₁H₂₃O-(CH₂-CH₂O)₂]₃Si(CH₂)₃-S-C(=O)-R⁴,
[(C₁₁H₂₃O-(CH₂-CH₂O)₃]₃Si(CH₂)₃-S-C(=O)-R⁴,
[(C₁₁H₂₃O-(CH₂-CH₂O)₄]₃Si(CH₂)₃-S-C(=O)-R⁴,
[(C₁₁H₂₃O-(CH₂-CH₂O)₅]₃Si(CH₂)₃-S-C(=O)-R⁴,
[(C₁₁H₂₃O-(CH₂-CH₂O)₆]₃Si(CH₂)₃-S-C(=O)-R⁴,

[(C₁₂H₂₅O-(CH₂-CH₂O)₂]₃Si(CH₂)₃-S-C(=O)-R⁴,
[(C₁₁H₂₅O-(CH₂-CH₂O)₃]₃Si(CH₂)₃-S-C(=O)-R⁴,
[(C₁₁H₂₅O-(CH₂-CH₂O)₄]₃Si(CH₂)₃-S-C(=O)-R⁴,
[(C₁₁H₂₅O-(CH₂-CH₂O)₅]₃Si(CH₂)₃-S-C(=O)-R⁴,
[(C₁₁H₂₅O-(CH₂-CH₂O)₆]₃Si(CH₂)₃-S-C(=O)-R⁴,

[(C₁₃H₂₇O-(CH₂-CH₂O)₂]₃Si(CH₂)₃-S-C(=O)-R⁴,
[(C₁₃H₂₇O-(CH₂-CH₂O)₃]₃Si(CH₂)₃-S-C(=O)-R⁴,
[(C₁₃H₂₇O-(CH₂-CH₂O)₄]₃Si(CH₂)₃-S-C(=O)-R⁴,
[(C₁₃H₂₇O-(CH₂-CH₂O)₅]₃Si(CH₂)₃-S-C(=O)-R⁴,
[(C₁₃H₂₇O-(CH₂-CH₂O)₆]₃Si(CH₂)₃-S-C(=O)-R⁴,

[(C₁₄H₂₉O-(CH₂-CH₂O)₂]₃Si(CH₂)₃-S-C(=O)-R⁴,
[(C₁₄H₂₉O-(CH₂-CH₂O)₃]₃Si(CH₂)₃-S-C(=O)-R⁴,
[(C₁₄H₂₉O-(CH₂-CH₂O)₄]₃Si(CH₂)₃-S-C(=O)-R⁴,
[(C₁₄H₂₉O-(CH₂-CH₂O)₅]₃Si(CH₂)₃-S-C(=O)-R⁴
[(C₁₄H₂₉O-(CH₂-CH₂O)₆]₃Si(CH₂)₃-S-C(=O)-R⁴, wobei die Alkylketten C₁₁-C₁₄linear oder verzweigt sein können.

Verbindungen der allgemeinen Formel II können beispielsweise sein
(MeO)Me₂Si(CH₂)₃SH,
(MeO)₂MeSi(CH₂)₃SH,
(EtO)Me₂Si(CH₂)₃SH,
(EtO)₂MeSi(CH₂)₃SH,
(MeO)₂(HO)Si(CH₂)₃SH,
(EtO)₂(HO)Si(CH₂)₃SH,
(MeO)₃Si(CH₂)₃SH,
(EtO)₃Si(CH₂)₃SH

(MeO)Me₂Si(CH₂)₃SCN,
(MeO)₂MeSi(CH₂)₃SCN,
(EtO)Me₂Si(CH₂)₃SCN,
(EtO)₂MeSi(CH₂)₃SCN,
(MeO)₂(HO)Si(CH₂)₃SCN,
(EtO)₂(HO)Si(CH₂)₃SCN,
(MeO)₃Si(CH₂)₃SCN,
(EtO)₃Si(CH₂)₃SCN,

(MeO)Me₂Si(CH₂)₃-S-C(=O)-R⁴,
(MeO)₂MeSi(CH₂)₃-S-C(=O)-R⁴,
(EtO)Me₂Si(CH₂)₃-S-C(=O)-R⁴,
(EtO)₂MeSi(CH₂)₃-S-C(=O)-R⁴,

(MeO)₂(HO)Si (CH₂)₃-S-C(=O)-R⁴,
(EtO)₂(HO)Si (CH₂)₃-S-C(=O)-R⁴,
(MeO)₃Si(CH₂)₃-S-C(=O)-R⁴,
(EtO)₃Si(CH₂)₃-S-C(=O)-R⁴,

(MeO)Me₂Si-CH₂-CH(CH₃)-CH₂-SH,
(MeO)Me₂Si-CH₂-CH(CH₃)-CH₂-SCN,
(MeO)Me₂Si-CH₂-CH(CH₃)-CH₂-S-C(=O)-R⁴,
(EtO)Me₂Si-CH₂-CH(CH₃)-CH₂-SH,
(EtO)Me₂Si-CH₂-CH(CH₃)-CH₂-SCN,
(EtO)Me₂Si-CH₂-CH(CH₃)-CH₂-S-C(=O)-R⁴,

(MeO)₂MeSi-CH₂-CH(CH₃)-CH₂-SH,
(MeO)₂MeSi-CH₂-CH(CH₃)-CH₂-SCN,
(MeO)₂MeSi-CH₂-CH(CH₃)-CH₂-S-C(=O)-R⁴,
(EtO)₂MeSi-CH₂-CH(CH₃)-CH₂-SH,
(EtO)₂MeSi-CH₂-CH(CH₃)-CH₂-SCN,
(EtO)₂MeSi-CH₂-CH(CH₃)-CH₂-S-C(=O)-R⁴,

(MeO)₂(HO)Si-CH₂-CH(CH₃)-CH₂-SH,
(MeO)₂(HO)Si-CH₂-CH(CH₃)-CH₂-SCN,
(MeO)₂(HO)Si-CH₂-CH(CH₃)-CH₂-S-C(=O)-R⁴,
(EtO)₂(HO)Si-CH₂-CH(CH₃)-CH₂-SH,
(EtO)₂(HO)Si-CH₂-CH(CH₃)-CH₂-SCN,
(EtO)₂(HO)Si-CH₂-CH(CH₃)-CH₂-S-C(=O)-R⁴,

(MeO)₃Si-CH₂-CH(CH₃)-CH₂-SH,
(MeO)₃Si-CH₂-CH(CH₃)-CH₂-SCN,
(MeO)₃Si-CH₂-CH(CH₃)-CH₂-S-C(=O)-R⁴,
(EtO)₃Si-CH₂-CH(CH₃)-CH₂-SH,
(EtO)₃Si-CH₂-CH(CH₃)-CH₂-SCN oder
(EtO)₃Si-CH₂-CH(CH₃)-CH₂-S-C(=O)-R⁴, wobei R⁴ die oben angegebene Bedeutung hat.

Bevorzugte Verbindungen der allgemeinen Formel III können beispielsweise sein:
HO- (CH₂-CH₂O)₂-C₁₁H₂₃, HO- (CH₂-CH₂O)₃-C₁₁H₂₃, HO- (CH₂-CH₂O)₄-C₁₁H₂₃, HO- (CH₂-CH₂O)₅-C₁₁H₂₃, HO- (CH₂-CH₂O)₆-C₁₁H₂₃, HO- (CH₂-CH₂O)₇-C₁₁H₂₃,
HO- (CH(CH₃)-CH₂O)₂-C₁₁H₂₃, HO- (CH(CH₃)-CH₂O)₃-C₁₁H₂₃, HO- (CH(CH₃)-CH₂O)₄-C₁₁H₂₃, HO- (CH (CH₃)-CH₂O)₅-C₁₁H₂₃, HO- (CH (CH₃)-CH₂O)₆-C₁₁H₂₃,HO- (CH (CH₃)-CH₂O)₇-C₁₁H₂₃,
HO- (CH₂-CH₂O)₂-C₁₂H₂₅, HO- (CH₂-CH₂O)₃-C₁₂H₂₅, HO- (CH₂-CH₂O)₄-C₁₂H₂₅,HO- (CH₂-CH₂O)₅-C₁₂H₂₅, HO- (CH₂-CH₂O)₆-C₁₂H₂₅, HO- (CH₂-CH₂O)₇-C₁₂H₂₅,
HO- (CH(CH₃)-CH₂O)₂-C₁₂H₂₅, HO- (CH(CH₃)-CH₂O)₃-C₁₂H₂₅, HO- (CH(CH₃)-CH₂O)₄-C₁₂H₂₅, HO- (CH (CH₃)-CH₂O)₅-C₁₂H₂₅, HO- (CH (CH₃)-CH₂O)₆-C₁₂H₂₅, HO- (CH (CH₃)-CH₂O)₇-C₁₂H₂₅,
HO- (CH₂-CH₂O)₂-C₁₃H₂₇, HO- (CH₂-CH₂O)₃-C₁₃H₂₇, HO- (CH₂-CH₂O)₄-C₁₃H₂₇, HO- (CH₂-CH₂O)₅-C₁₃H₂₇, HO- (CH₂-CH₂O)₆-C₁₃H₂₇, HO- (CH₂-CH₂O)₇-C₁₃H₂₇,
HO- (CH (CH₃)-CH₂O)₂-C₁₃H₂₇, HO- (CH (CH₃)-CH₂O)₃-C₁₃H₂₇, HO- (CH (CH₃)-CH₂O)₄-C₁₃H₂₇, HO- (CH (CH₃)-CH₂O)₅-C₁₃H₂₇, HO- (CH (CH₃)-CH₂O)₆-C₁₃H₂₇, HO- (CH (CH₃)-CH₂O)₇-C₁₃H₂₇,
HO- (CH₂-CH₂O)₂-C₁₄H₂₉, HO- (CH₂-CH₂O)₃-C₁₄H₂₉, HO- (CH₂-CH₂O)₄-C₁₄H₂₉, HO- (CH₂-CH₂O)₅-C₁₄H₂₉, HO- (CH₂-CH₂O)₆-C₁₄H₂₉, HO- (CH₂-CH₂O)₇-C₁₄H₂₉,
HO- (CH (CH₃)-CH₂O)₂-C₁₄H₂₉, HO- (CH (CH₃)-CH₂O)₃-C₁₄H₂₉, HO- (CH (CH₃)-CH₂O)₄-C₁₄H₂₉, HO-(CH (CH₃)-CH₂O)₅-C₁₄H₂₉, HO-(CH (CH₃)-CH₂O)₆-C₁₄H₂₉, HO- (CH (CH₃)-CH₂O)₇-C₁₄H₂₉,
HO- (CH₂-CH₂O)₂-C₁₅H₃₁, HO- (CH₂-CH₂O)₃-C₁₅H₃₁, HO- (CH₂-CH₂O)₄-C₁₅H₃₁, HO- (CH₂-CH₂O)₅-C₁₅H₃₁, HO- (CH₂-CH₂O)₆-C₁₅H₃₁, HO- (CH₂-CH₂O)₇-C₁₅H₃₁,
HO- (CH(CH₃)-CH₂O)₂-C₁₅H₃₁, HO- (CH(CH₃)-CH₂O)₃-C₁₅H₃₁, HO- (CH(CH₃)-CH₂O)₄-C₁₅H₃₁, HO- (CH (CH₃)-CH₂O)₅-C₁₅H₃₁, HO- (CH (CH₃)-CH₂O)₆-C₁₅H₃₁, HO- (CH (CH₃)-CH₂O)₇-C₁₅H₃₁,
HO- (CH₂-CH₂O)₂-C₁₆H₃₃, HO- (CH₂-CH₂O)₃-C₁₆H₃₃, HO- (CH₂-CH₂O)₄-C₁₆H₃₃, HO- (CH₂-CH₂O)₅-C₁₆H₃₃, HO- (CH₂-CH₂O)₆-C₁₆H₃₃, HO- (CH₂-CH₂O) ₇-C₁₆H₃₃,
HO- (CH (CH₃)-CH₂O)₂-C₁₆H₃₃, HO- (CH (CH₃)-CH₂O)₃-C₁₆H₃₃, HO- (CH (CH₃)-CH₂O)₄-C₁₆H₃₃, HO- (CH(CH₃)-CH₂O)₅-C₁₆H₃₃, HO- (CH(CH₃)-CH₂O)₆-C₁₆H₃₃, HO- (CH (CH₃)-CH₂O)₇-C₁₆H₃₃,
HO- (CH₂-CH₂O)₂-C₁₇H₃₅, HO- (CH₂-CH₂O)₃-C₁₇H₃₅, HO- (CH₂-CH₂O)₄-C₁₇H₃₅, HO- (CH₂-CH₂O)₅-C₁₇H₃₅, HO- (CH₂-CH₂O)₆-C₁₇H₃₅, HO- (CH₂-CH₂O)₇-C₁₇H₃₅,
HO- (CH (CH₃)-CH₂O)₂-C₁₇H₃₅, HO- (CH (CH₃)-CH₂O)₃-C₁₇H₃₅, HO- (CH (CH₃)-CH₂O)₄-C₁₇H₃₅, HO- (CH (CH₃)-CH₂O)₅-C₁₇H₃₅, HO- (CH (CH₃)-CH₂O)₆-C₁₇H₃₅ oder HO-(CH(CH₃)-CH₂O)₇-C₁₇H₃₅.

Die Alkohole der allgemeinen Formel III können eine mittlere Verzweigungszahl der Kohlenstoffkette Alk von 1 bis 5, vorzugsweise 1,2 bis 4, haben. Die mittlere Verzweigungszahl ist dabei definiert als die Anzahl der CH₃-Gruppen-1.

Als Katalysator können metallhaltige Verbindungen, wie Metallchloride, -oxide, -oxychloride, -alkoholate, -amide, oder Übergangsmetallverbindungen mit multiplen gebundenen Liganden eingesetzt werden.

Die metallhaltigen Verbindungen können beispielsweise Halogenide, Oxide, Imide, Alkoholate, Amide, Thiolate, Carboxylate und/oder Kombinationen dieser Substituenten von Elementen der 3. und 4. Hauptgruppe des Periodensystems der Elemente (PSE) sowie der 3., 4., 5., 6. und 7. Nebengruppe des PSE sein. Die Metallverbindungen können freie Koordinationsstellen am Metall haben.

In einer besonderen Ausführung können Titanate, wie beispielsweise Tetra-*n*-butylorthotitanat, eingesetzt werden.

Als protonenliefernde Co-Katalysatoren können Verbindungen, die vor und/oder während und/oder nach der Umesterungsreaktion Protonen bereitstellen oder unter Freisetzung von Protonen reagieren eingesetzt werden.

Verbindungen die als protonenliefernde Co-Katalysatoren verwendet werden können, können insbesondere Brönsted-Säuren sein. Solche Säuren können Wasserstoffverbindungen der 7. Hauptgruppe des PSE sowie Wasserstoff-Sauerstoffverbindungen der 3., 4., 5., 6. und 7. Hauptgruppe des PSE sowie der 4., 5., 6., 7. und 8. Nebengruppe des PSE sein.

Verbindungen die als protonenliefernde Co-Katalysatoren verwendet werden können, können aber auch Verbindungen sein, die mit Alkoholen der allgemeinen Formel III unter Freisetzung von Protonen vor und/oder während und/oder nach der Umsetzung reagieren. Solche Verbindungen können beispielsweise Halogenverbindungen der 3., 4., 5. und 6. Hauptgruppe sowie der 4., 5., 6., 7. und 8. Nebengruppe des PSE sein. Außerdem können solche Verbindungen Anhydride der Oxosäuren von Elementen der 3., 4., 5. und 6. Hauptgruppe sowie der 4., 5., 6., 7. und 8. Nebengruppe des PSE sein.

Die Verbindungen können einen oder mehrere organische Reste, wie beispielsweise Alkylketten, die mit Heteroatomen funktionalisiert sein können, enthalten.

Solche Verbindungen können beispielsweise Carbonsäurechloride oder Carbonsäureanhydride sein.

In einer besonderen Ausführung können Organylchlorsilane, wie beispielsweise Chlormethyltrichlorsilan, Chlorpropyltrichlorsilan oder Chlorpropyldiethoxychlorsilan, eingesetzt werden.

Desweiteren können festphasengebundene Protonen als protonenliefernde Co-Katalysatoren eingesetzt werden. Quellen solcher Protonen können beispielsweise saure Ionentauscherharze, wie Amberlyst 15, Dowex 50 oder Deloxan ASP I/9, sein.

Diese protonenliefernden Co-Katalysatoren können vor und/oder während und/oder nach der Reaktion zugegeben werden.

Das Gewichtsverhältnis Katalysator: protonenliefernder Co-Katalysator kann 1:0 bis 0:1, bevorzugt 1:1 bis 0:1, besonders bevorzugt 0,5:1 bis 0:1, sein.

In einer besonderen Ausführungsform kann bei Verwendung der oben genannten protonenliefernden Co-Katalysatoren teilweise oder ganz auf die Verwendung der genannten Katalysatoren verzichtet werden.

Die alkylpolyethersubstituierten Mercaptosilane der allgemeinen Formel I können zudem erst nach ihrer Herstellung mit den protonenliefernden Co-Katalysatoren zur Entfärbung behandelt werden.

Überschüssige Protonen können während und/oder nach der Reaktion abgetrennt und/oder vernichtet werden.

Die Reaktion kann bei Temperaturen zwischen 20 und 200 °C, bevorzugt zwischen 50 und 170 °C, besonders bevorzugt zwischen 80 und 150 °C, durchgeführt werden. Zur Vermeidung von Kondensationsreaktionen kann es vorteilhaft sein, die Reaktion in einer wasserfreien Umgebung, idealerweise in einer Inertgasatmosphäre, durchzuführen.

Die Reaktion kann bei Normaldruck oder reduziertem Druck durchgeführt werden. Die Reaktion kann kontinuierlich oder diskontinuierlich durchgeführt werden.

Ein weiterer Gegenstand der Erfindung sind Kautschukmischungen, enthaltend die erfindungsgemäßen alkylpolyethersubstituierte Mercaptosilane der allgemeinen Formel I mit einer Farbzahl nach Hazen von ≤ 250 mg Pt-Co/L, bevorzugt ≤ 200 mg Pt-Co/L.

Das erfindungsgemäße Verfahren hat den Vorteil, dass alkylpolyethersubstituierte Mercaptosilane mit einer Farbzahl nach Hazen ≤ 250 mg Pt-Co/L hergestellt werden können. Die Herstellung kann dabei in einem Schritt erfolgen, eine Nachbehandlung der erhaltenen Verbindungen ist nicht notwendigerweise erforderlich. Die beschriebenen protonenliefernden Co-Katalysatoren können zudem die bisher verwendeten Katalysatoren ganz oder teilweise ersetzen.

### Beispiele

Die verwendeten ethoxylierten Isotridecanole sind Verkausprodukte der Firmen BASF (Lutensol TO 5) bzw. Sasol (Marlipal O13/50) und haben einen mittleren Ethoxylierungsgrad von ca. 5. Titantetrabutylat und Essigsäureanhydrid können von der Firma Merck bezogen und ohne weitere Reinigung verwendet werden. Chlormethyltrichlorsilan, Chlorpropyltrichlorsilan und Amberlyst 15 dry (ein sulfonsäurefunktionalisiertes Styrol-Divinylbenzol-Copolymeres) können von Sigma-Aldrich bezogen und ohne weitere Reinigung verwendet werden.

3-Mercaptopropyltriethoxysilan (MPTES) ist ein Produkt der Degussa GmbH und kann unter dem Handelsnamen VP Si 263 bezogen werden.

Das Produkt kann massenspektrometrisch und NMR-spektroskopisch charakterisiert werden. Die Farbzahl nach Hazen wird nach DIN/ISO 6271 bestimmt.

### Beispiel 1 (Vergleichsbeispiel zu Beispiel 2-5):

In einem 500 ml-Kolben mit Destillationsbrücke werden unter N₂-Schutzgas 88,5 g Lutensol TO 5 (0,21 mol) und 88,5 g Marlipal 013/50 (0,21 mol) sowie 25 µL Ti(O*n*-Bu)₄ vorgelegt. Dazu werden 50 g MPTES (0,21 mol) gegeben. Dann wird für 1 h auf 140 °C erwärmt und nach dieser Zeit der Druck bis auf 20 mbar abgesenkt. Das Ende der Reaktion wird durch die Menge des abdestillierten Ethanols bestimmt. Man erhält eine orangebraune, leicht trübe Flüssigkeit mit 98 % Ausbeute.
Farbzahl nach Hazen: 360 mg Pt-Co/L

### Beispiel 2:

In einem 500 ml-Kolben mit Destillationsbrücke werden unter N₂-Schutzgas 88,5 g Lutensol TO 5 (0,21 mol) und 88,5 g Marlipal 013/50 (0,21 mol) sowie 25 µL Ti(O*n*-Bu)₄ und 137 µL Chlormethyltrichlorsilan vorgelegt. Dazu werden 50 g MPTES (0,21 mol) gegeben. Dann wird für 1 h auf 140 °C erwärmt und nach dieser Zeit der Druck bis auf ca. 20 mbar abgesenkt. Das Ende der Reaktion wird durch die Menge des abdestillierten Ethanols bestimmt. Man erhält eine hellgraue, leicht trübe Flüssigkeit mit quantitativer Ausbeute.

Farbzahl nach Hazen: 150 mg Pt-Co/L

### Beispiel 3:

In einem 500 ml-Kolben mit Destillationsbrücke werden unter N₂-Schutzgas 35,2 g Lutensol TO 5 (0,08 mol) und 35,2 g Marlipal 013/50 (0,08 mol) sowie 10 µL Ti(O*n*-Bu)₄ und 55 µL Chlorpropyltrichlorsilan vorgelegt. Dazu werden 20 g MPTES (0,08 mol) gegeben. Dann wird für 1 h auf 140 °C erwärmt und nach dieser Zeit der Druck bis auf 20 mbar abgesenkt. Das Ende der Reaktion wird durch die Menge des abdestillierten Ethanols bestimmt. Man erhält eine pastell-violette Flüssigkeit mit 99% Ausbeute.

Farbzahl nach Hazen: 170 mg Pt-Co/L

### Beispiel 4:

In einem 500 ml-Kolben mit Destillationsbrücke werden unter N₂-Schutzgas 88,5 g Lutensol TO 5 (0,21 mol) und 88,5 g Marlipal 013/50 (0,21 mol) sowie 25 µL Ti(O*n*-Bu)₄ und 500 mg Essigsäureanhydrid vorgelegt. Dazu werden 50 g MPTES (0,21 mol) gegeben. Dann wird für 1 h auf 140 °C erwärmt und nach dieser Zeit der Druck bis auf 20 mbar abgesenkt. Das Ende der Reaktion wird durch die Menge des abdestillierten Ethanols bestimmt. Man erhält eine beige-rote Flüssigkeit mit quantitativer Ausbeute.

Farbzahl nach Hazen: 140 mg Pt-Co/L

### Beispiel 5:

In einem 500 ml-Kolben mit Destillationsbrücke werden unter N₂-Schutzgas 35,2 g Lutensol TO 5 (0,08 mol) und 35,2 g Marlipal 013/50 (0,08 mol) sowie 12,6 µL Ti(O*n*-Bu)₄ und 1 g Amberlyst 15 dry vorgelegt. Dazu werden 20 g MPTES (0,08 mol) gegeben. Dann wird für 1 h auf 140 °C erwärmt und nach dieser Zeit der Druck bis auf 20 mbar abgesenkt. Das Ende der Reaktion wird durch die Menge des abdestillierten Ethanols bestimmt. Man erhält eine altrosa Flüssigkeit mit quantitativer Ausbeute.

Farbzahl nach Hazen: 160 mg Pt-Co/L

### Beispiel 6 (Vergleichsbeispiel zu Beispiel 7 und 8):

In einem 500 ml-Kolben mit Destillationsbrücke werden unter N₂-Schutzgas 75,6 g Lutensol TO 5 (0,18 mol) und 75,6 g Marlipal 013/50 (0,18 mol) sowie 21,4 µL Ti(O*n*-Bu)₄ vorgelegt. Dazu werden 42,8 g MPTES (0,18 mol) gegeben. Dann wird für 1 h auf 140 °C erwärmt und nach dieser Zeit der Druck bis auf 30 mbar abgesenkt. Das Ende der Reaktion wird durch die Menge des abdestillierten Ethanols bestimmt. Man erhält eine dunkelrote, leicht trübe Flüssigkeit mit 92 % Ausbeute.

Farbzahl nach Hazen: > 1000 mg Pt-Co/L

### Beispiel 7:

In einem 500 ml-Kolben mit Destillationsbrücke werden unter N₂-Schutzgas 35,2 g Lutensol TO 5 (0,08 mol) und 35,2 g Marlipal 013/50 (0,08 mol) sowie 12,6 µL Ti(O*n*-Bu)₄ und 119 µL Chlormethyltrichlorsilan vorgelegt. Dazu werden 20,1 g MPTES (0,08 mol) gegeben. Dann wird für 1 h auf 140 °C erwärmt und nach dieser Zeit der Druck bis auf 20 mbar abgesenkt. Das Ende der Reaktion wird durch die Menge des abdestillierten Ethanols bestimmt. Man erhält eine hellgelbe, klare Flüssigkeit mit 99 % Ausbeute.

Farbzahl nach Hazen: 55 mg Pt-Co/L

### Beispiel 8:

In einem 500 ml-Kolben mit Destillationsbrücke werden unter N₂-Schutzgas 35,6 g Lutensol TO 5 (0,08 mol) und 35,6 g Marlipal 013/50 (0,08 mol) sowie 1,02 g Ionentauscherharz Amberlyst 15 dry vorgelegt. Dazu werden 20,2 g MPTES (0,08 mol) gegeben. Dann wird für 1 h auf 140 °C erwärmt und nach dieser Zeit der Druck bis auf 20 mbar abgesenkt. Das Ende der Reaktion wird durch die Menge des abdestillierten Ethanols bestimmt. Man erhält eine hellgelbe, klare Flüssigkeit mit 98 % Ausbeute.

Farbzahl nach Hazen: 140 mg Pt-Co/L

### Beispiel 9 (Vergleichsbeispiel zu Beispiel 10):

In einem 500 ml-Kolben mit Destillationsbrücke werden unter N₂-Schutzgas 50 g Lutensol TO 5 (0,12 mol) und 50 g Marlipal 013/50 (0,12 mol) sowie 14 µL Ti(O*n*-Bu)₄ vorgelegt. Dazu werden 28 g MPTES (0,12 mol) gegeben. Dann wird für 1 h auf 140 °C erwärmt und nach dieser Zeit der Druck bis auf 20 mbar abgesenkt. Das Ende der Reaktion wird durch die Menge des abdestillierten Ethanols bestimmt. Man erhält eine orangebraune Flüssigkeit mit quantitativer Ausbeute.

Farbzahl nach Hazen: 330 mg Pt-Co/L

### Beispiel 10:

In einem 500 ml-Kolben mit Destillationsbrücke werden unter N₂-Schutzgas 70,5 g Lutensol TO 5 (0,17 mol) und 70,5 g Marlipal 013/50 (0,17 mol) sowie 238 µL Chlormethyltrichlorsilan vorgelegt. Dazu werden 40 g MPTES (0,17 mol) gegeben. Dann wird für 1 h auf 140 °C erwärmt und nach dieser Zeit der Druck bis auf 20 mbar abgesenkt. Das Ende der Reaktion wird durch die Menge des abdestillierten Ethanols bestimmt. Man erhält eine beige-rote Flüssigkeit mit quantitativer Ausbeute.

Farbzahl nach Hazen: 30 mg Pt-Co/L

### Beispiel 11:

In einem Rundkolben werden 50 g des Degussa Silans VP Si 363 (Farbzahl: 480 mg Pt-Co/L) mit 5 g Ionentauscherharz Amberlyst 15 dry bei 50°C für 30 min behandelt. Anschließend wird vom Ionentauscher abgetrennt.

Farbzahl nach Hazen: nach Abtrennung 190 mg Pt-Co/L

## Patentansprüche

1. Verfahren zur Herstellung von alkylpolyethersubstituierten Mercaptosilanen der allgemeinen Formel I,
(X)ₘ(X')ₙ(X'')ₒSi(-R¹-SR²)ₚ (I)
wobei p gleich 1, 2 oder 3, m gleich 1, 2 oder 3, n und o gleich 0, 1 oder 2 und m+p+n+o = 4 ist,
die Gruppen X gleich oder verschieden sind und X eine Alkylpolyethergruppe O-((CR³₂)_{w}-O-)ᵥ Alk ist, mit
v = 1-40,
w = 1-40,
R³ unabhängig voneinander H, eine Phenyl- oder eine unverzweigte oder verzweigte Alkylgruppe ist,
Alk eine verzweigte oder unverzweigte, gesättigte oder ungesättigte, substituierte oder unsubstituierte, aliphatische, aromatische oder gemischt aliphatische /aromatische einbindige C₁-C₃₅ -Kohlenwasserstoffgruppe ist, die Gruppen X' gleich oder verschieden sind und X' eine verzweigte oder unverzweigte Alkoxy-,
eine verzweigte oder unverzweigte C₂-C₂₅ Alkenyloxy-,
eine C₆-C₃₅ Aryloxy-,
eine verzweigte oder unverzweigte C₇-C₃₅ Alkylaryloxy-,
eine verzweigte oder unverzweigte C₇-C₃₅ Aralkyloxy-,
oder eine Hydroxygruppe (-OH) ist,
die Gruppen X'' gleich oder verschieden sind und X'' unabhängig voneinander eine verzweigte oder unverzweigte Alkylgruppe ist,
R¹ eine verzweigte oder unverzweigte, gesättigte oder ungesättigte, aliphatische, aromatische oder gemischt aliphatische /aromatische zweibindige C₁-C₃₀ Kohlenwasserstoffgruppe, die gegebenenfalls durch Heteroatome substituiert ist, ist,
R² CN, H oder eine substituierte Carbonylgruppe -C(Het)-Alk ist, wobei Het ein doppelt gebundenes Heteroatom O, S oder NAlk ist und Alk die oben angegebene Bedeutung hat,
mit einer Farbzahl nach Hazen von ≤ 250 mg Pt-Co/L,
**dadurch gekennzeichnet,**
**dass** man Verbindungen der allgemeinen Formel II,
(X')ₘ₊ₙ(X'')ₒSi(-R¹-SR²)ₚ (II)
wobei X', X'', R¹, R², m, n, o und p die oben angegebenen Bedeutungen haben,
mit m Äqiuvalenten der Verbindungen der allgemeinen Formel III,
H-O-((CR³₂)_{w}-O-)ᵥ Alk (III)
wobei R³, Alk, v und w die oben angegebenen Bedeutungen haben,
unter Verwendung eines protonenliefernden Co-Katalysators und gegebenenfalls eines weiteren Katalysators umsetzt und freigesetztes X'-H von dem Reaktionsgemisch abtrennt.

2. Verfahren gemäß Anspruch 1, **dadurch gekennzeichnet, dass** man einen protonenliefernden Co-Katalysator und keinen Katalysator einsetzt.

3. Verfahren gemäß Anspruch 1 und 2, **dadurch gekennzeichnet, dass** man den protonenliefernden Co-Katalysator vor und/oder während und/oder nach der Umsetzung zugibt.

4. Verfahren gemäß Anspruch 1, **dadurch gekennzeichnet, dass** man als protonenliefernden Co-Katalysator Verbindungen einsetzt, die vor und/oder während und/oder nach der Umsetzung Protonen zur Verfügung stellen oder unter Freisetzung von Protonen reagieren.

5. Verfahren gemäß Anspruch 1, **dadurch gekennzeichnet, dass** man als protonenliefernden Co-Katalysator Brönsted-Säuren einsetzt.

6. Verfahren gemäß Anspruch 1, **dadurch gekennzeichnet, dass** man als protonenliefernden Co-Katalysator saure Ionentauscherharze einsetzt.

7. Verfahren gemäß Anspruch 1, **dadurch gekennzeichnet, dass** das Gewichtsverhältnis von Katalysator: protonenliefernder Co-Katalysator 1:0 bis 0:1 beträgt.

8. Verfahren gemäß Anspruch 1, **dadurch gekennzeichnet, dass** man die Umsetzung bei 20-200 °C durchführt.

9. Verfahren gemäß Anspruch 1, **dadurch gekennzeichnet, dass** man die Umsetzung in einer wasserfreien Inertgasatmosphäre durchführt.

10. Kautschukmischungen, enthaltend alkylpolyethersubstituierte Mercaptosilane der allgemeinen Formel I mit einer Farbzahl nach Hazen von ≤ 250 mg Pt-Co/L.
